(19) Europäisches Patentamt
European Patent Office
Office européen des brevets

(11) **EP 3 465 120 B1**

(12) **FASCICULE DE BREVET EUROPEEN**

(45) Date de publication et mention de la délivrance du brevet:
**14.10.2020 Bulletin 2020/42**

(21) Numéro de dépôt: **17723419.2**

(22) Date de dépôt: **18.05.2017**

(51) Int Cl.:
*G01L 5/16* (2020.01)    *G01L 5/22* (2006.01)
*G01L 1/16* (2006.01)

(86) Numéro de dépôt international:
**PCT/EP2017/061915**

(87) Numéro de publication internationale:
**WO 2017/207284 (07.12.2017 Gazette 2017/49)**

(54) **CAPTEUR D'EFFORTS RESONANT MULTIDIMENSIONNEL**

MEHRDIMENSIONALER RESONANTER KRAFTSENSOR

MULTIDIMENSIONAL RESONANT FORCE SENSOR

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **01.06.2016 FR 1654963**

(43) Date de publication de la demande:
**10.04.2019 Bulletin 2019/15**

(73) Titulaire: **Commissariat à l'Énergie Atomique et aux Énergies Alternatives 75015 Paris (FR)**

(72) Inventeurs:
• **CASTANO CANO, Davinson**
  **92160 ANTONY (FR)**
• **GROSSARD, Mathieu**
  **91370 VERRIERES LE BUISSON (FR)**
• **HUBERT, Arnaud**
  **60200 COMPIEGNE (FR)**

(74) Mandataire: **Marks & Clerk France Immeuble "Visium" 22, avenue Aristide Briand 94117 Arcueil Cedex (FR)**

(56) Documents cités:
**EP-A2- 0 261 071    WO-A1-89/04469**

• **Davinson Cast ET AL: "Development and Characterization of a Dynamic Smart Structure Providing Multi-axis Force Sensing for Robotic Applications", , 30 mai 2015 (2015-05-30), XP055345324, Extrait de l'Internet: URL:http://ieeexplore.ieee.org/ielx7/71287 61/7138973/07139739.pdf?tp=&arnumber=71397 39&isnumber=7138973 [extrait le 2017-02-14]**
• **CASTANO-CANO DAVINSON ET AL: "Next force sensing technology for robots: multi-axis resonant sensors", SPIE - INTERNATIONAL SOCIETY FOR OPTICAL ENGINEERING. PROCEEDINGS, S P I E - INTERNATIONAL SOCIETY FOR OPTICAL ENGINEERING, US, vol. 9859, 13 mai 2016 (2016-05-13), pages 98590H-98590H, XP060066531, ISSN: 0277-786X, DOI: 10.1117/12.2234049 ISBN: 978-1-5106-0753-8**

EP 3 465 120 B1

**Description**

La présente invention concerne un capteur d'efforts résonant multidimensionnel. Elle s'applique notamment dans les domaines de la robotique, de la mécatronique et plus généralement tous les domaines techniques nécessitant des mesures d'efforts.

En tant que propriété intensive, une force ne peut pas être mesurée directement. Des capteurs de forces permettent d'estimer la force appliquée via la déformation ou le déplacement d'un corps d'épreuve, ou toute autre quantité physique mesurable.

Un capteur de force est un dispositif qui allie à la fois l'électronique et la mécanique. Il permet de convertir une force, c'est-à-dire une grandeur physique vectorielle en une grandeur électrique. Pour ce faire, différentes technologies et principes physiques de capteurs existent pour la mesure d'effort, qu'il s'agisse de forces ou de moments. On peut notamment citer les capteurs construits en utilisant des jauges de déformation mécanique connectées en un pont électronique approprié, un pont de *Wheatstone* généralement. Ce type de capteur est le plus couramment rencontré, aussi bien dans le milieu industriel que dans la littérature scientifique. Pour autant, ce principe présente un certain nombre d'inconvénients, parmi lesquels on peut citer le bruit de mesure et les phénomènes de décollement des jauges sur le corps d'épreuve du capteur.

Un autre principe physique exploitant des mécanismes résonants est également à la base de quelques capteurs de force. Les capteurs résonants exploitent la mesure de la variation fréquentielle de résonances mécaniques d'une structure au moyen de transducteurs pour estimer une force.

Actuellement, les capteurs d'efforts exploitant le principe de structure résonante ne permettent pas de mesurer directement et simultanément l'ensemble de toutes les composantes du torseur d'effort appliqué au corps d'épreuve du capteur. Pour le moment, il existe des capteurs résonants unitaires qui restent limités à la mesure d'une seule composante d'effort (force longitudinale ou transversale). La mesure de certaines autres composantes du torseur d'effort ne peut se faire qu'en rapportant sur la structure hôte d'autres capteurs unitaires dont la configuration spatiale permet la mesure de composantes d'effort dans d'autres directions. La reconstruction dynamique et simultanée de l'ensemble des composantes du torseur d'effort n'est donc pas directe.

Le document Davinson Cast et al : « Development and Characterization of a Dynamic Smart Structure Providing Multi-axis Force Sensing for Robotic Applications », 2015 IEEE International Conférence on Robotics and Automation décrit un capteur de force multi-axes basé sur une plaque composite résonante pré-contrainte. Le document Castano-Cano Davinson et al : « Next force sensing technology for robots : multi-axis resonant sensors », SPIE - International society for optical engineering, proceedings, vol. 9859, 13 mai 2016 décrit un capteur de force multi-axes pour mesurer trois composantes distinctes de force. Néanmoins, ces documents ne donnent pas d'information sur la géométrie des cadres. En particulier, il est connu des capteurs de forces résonants avec des géométries de type « poutre », réalisés avec des configurations de type une, deux voire trois poutres parallèles, comme décrits notamment dans les documents de A. Cheshmehdoost and B.E. Jones. Design and performance characteristics of an integrated high capacity DETF-based force sensor. Sensors and Actuators A: Physical, 52(13) : 99-102, Mars 1996 et de T. Fabula, H.J. Wagner, B. Schmidt, and S. Buttgenbach. Triple-beam resonant silicon force sensor based on piezoelectric thin _lms. Sensors and Actuators A: Physical, 42(13):375-380, Avril 1994. Ces dernières présentent des avantages sur les cas de configuration dite « mono-poutre », par exemple, meilleur facteur de qualité, et plus grande sensibilité. Ce type de structures a été utilisé pour mesurer une seule composante de la force, en général, celle dont la direction est alignée le long de l'axe de la poutre. Un document C. Barthod, Y. Teisseyre, C. Ghin, and G. Gautier. Resonant force sensor using a PLL electronic. Sensors and Actuators A: Physical, 104(2):143-150, Avril 2003 décrit des mesures de force non-axiales où les structures utilisent des mécanismes de transformation. Cependant, ces mécanismes sont coûteux et complexes à mettre en œuvre. Un problème technique à résoudre est donc la réalisation d'un capteur d'effort résonant apte à mesurer les composantes d'efforts dans les six dimensions, c'est-à-dire les trois dimensions de force et les trois dimensions de couple, par ailleurs fiable et économique.

Un but de l'invention est notamment de permettre la réalisation d'un tel capteur d'effort résonant multi dimensionnel. A cet effet, l'invention a pour objet un capteur d'efforts résonant comportant un corps d'épreuve apte à subir un torseur d'efforts produits par une structure mécanique externe, ledit corps comportant au moins :

- une première interface et une deuxième interface aptes chacune à entrer en contact avec ladite structure ;
- au moins deux éléments sensibles disposés chacun entre ces deux interfaces ;

chacun des au moins deux éléments sensibles comportant une plaque encastrée dans un cadre solidaire mécaniquement desdites interfaces, ledit cadre étant fixé auxdites interfaces par deux coins opposés, les deux autres coins étant libres, une augmentation locale de masse étant réalisée en chaque coin dudit cadre par rapport au cadre de base; chaque plaque étant apte à entrer en résonance sous l'effet d'excitations mécaniques locales produites en des points particuliers par des transducteurs d'excitation portant ladite plaque à plusieurs fréquences de résonances, des capteurs captant les signaux résonant produits au niveau desdits points particuliers, des moyens de mesure mesurant les décalages de fréquences de résonance de signaux qui sont des combinaisons linéaires des signaux résonant captés, lesdits décalages étant fonction de contraintes mécaniques induites par lesdits efforts et transmises à ladite plaque par ledit cadre, les composantes dudit torseur d'efforts étant déterminées à partir des décalages de fréquences de résonance mesurés sur les plaques desdits éléments sensibles.

Lesdites excitations sont par exemple produites simultanément.

Lesdits points particuliers sont par exemple situés en des lignes nodales de mode vibratoires de façon à permettre la sélection de fréquences de résonances de modes particuliers par lesdites combinaisons.

La combinaison des desdites fréquences est par exemple une opération d'addition ou de soustraction.

Dans un mode de réalisation particulier, chaque plaque ayant une dimension selon un axe x et une dimension selon un axe y, elle comporte quatre points particuliers d'excitation, un point Nord et un point Sud étant situés sur l'axe de symétrie de ladite plaque selon y, et un point Ouest et un point Est étant situés sur l'axe de symétrie selon x, lesdits points Nord et Sud et Ouest et Est étant situés symétriquement par rapport à l'intersection des deux axes de symétrie.

Trois fréquences de résonances de trois modes vibratoires sont par exemple sélectionnées, une fréquence d'un premier mode étant sélectionnée en additionnant les fréquences de résonance du point Nord ($N^U$) et du point Sud ($N^U + S^U$) et/ou du point Ouest ($W^U$) et du point Est ($W^U + E^U$), une fréquence d'un deuxième mode étant sélectionnée en effectuant une soustraction entre la mesure du point Nord et la mesure du point Sud ($N^U - S^U$), et une troisième fréquence d'un troisième mode étant sélectionnée en effectuant une soustraction entre la mesure du point Ouest et la mesure du point Est ($W^U - E^U$).

Dans un autre mode de réalisation possible, chaque plaque comporte six points particuliers d'excitation, deux points étant placés sur un premier axe de symétrie et disposés symétriquement par rapport au deuxième axe de symétrie, les quatre autres points étant disposés de part et d'autre de ces axes de symétrie de telle façon que l'ensemble des six points forme un hexagone.

Les mesures de décalages sont par exemple effectuées par des circuits à verrouillage de phase (81) dont le signal de sortie commande un transducteur.

Lesdits transducteurs sont par exemple de type piézo-électrique.

Les capteurs sont par exemple de type piézo-électrique, fixés chacun en regard d'un transducteur de l'autre côté de la face de ladite plaque, les signaux produits étant les signaux de charges desdits capteurs de type piézo-électrique.

Chacun desdits coins fixant ledit cadre à une interfaces est prolongés via un coude par une poutrelle parallèle audit cadre, ladite poutrelle étant encastrée dans l'interface, la fixation dudit élément sensible étant réalisé par l'encastrement de la poutrelle.

L'augmentation locale de masse au niveau desdits coins est par exemple réalisée par l'augmentation locale en ces points de l'épaisseur dudit cadre et/ou de la largeur dudit cadre vers l'extérieur.

L'augmentation locale de masse au niveau desdits coins peut également être réalisée par l'augmentation locale de densité de masse volumique.

Les épaisseurs des plaques desdits éléments sensibles prises deux à deux sont par exemple différentes.

La géométrie dudit corps d'épreuve est par exemple invariante selon l'angle séparant les points centraux de deux éléments sensibles.

Ladite plaque sensible d'un élément sensible est par exemple placée en dehors de la fibre neutre de l'ensemble formé du cadre et de ladite plaque.

D'autres avantages et caractéristiques de l'invention apparaîtront à l'aide de la description qui suit, faite en regard de dessins annexés qui représentent :

- Les figures 1a à 1d, un exemple de réalisation d'un capteur selon l'invention par plusieurs vues en perspective ;
- La figure 2, une illustration du principe de détection d'effort par résonance ;
- La figure 3, un exemple de réalisation d'un élément sensible d'un capteur selon l'invention ;
- La figure 4, un complément à la figure précédente montrant une plaque vibrante équipée de transducteurs ;
- La figure 5, par une vue en coupe, un mode de réalisation particulièrement avantageux d'une zone sensible ;
- La figure 6, un exemple de configuration de placement de transducteurs sur une plaque d'une zone sensible ;
- La figure 7, une illustration des propriétés de filtre spatiale de la configuration précédente ;
- La figure 8, par une vue en coupe, un module de contrôle d'un transducteur ;
- La figure 9, une illustration d'une stratégie de mesure vis-à-vis des de transducteurs utilisés en mode capteur ;
- Les figures 10a, 10b et 10c, une illustration d'un autre exemple de configuration de placement de transducteurs ;
- La figure 11, un exemple de configuration de connexion des entrées et des sorties de capteurs de signaux ;
- La figure 12, une illustration d'un problème susceptible de se produire en relation avec la structure de certains éléments sensibles ;
- La figure 13, l'élément sensible de la figure 3 vu de face mettant en évidence des parties massives ;

- La figure 14, une illustration du rejet de fréquences non désirée ; et
- La figure 15, l'évolution de la fréquence de résonance d'une plaque en fonction de son épaisseur.

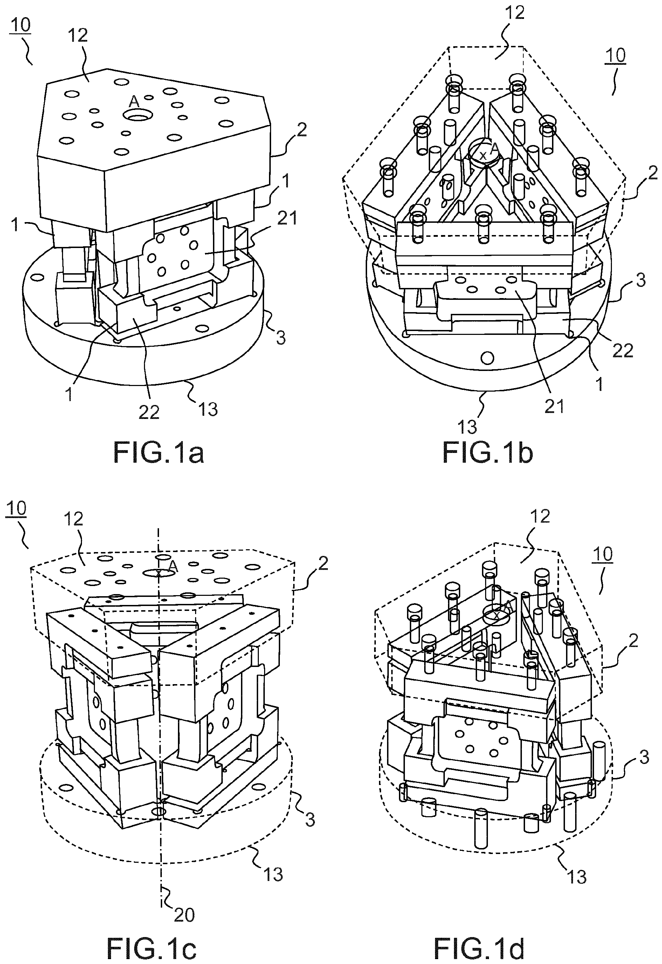

Les figures 1a à 1d présentent un exemple de réalisation d'un capteur selon l'invention par plusieurs vues en perspective. Les figures 1b, 1c et 1d présentent des parties en transparence pour une meilleure compréhension de la structure de l'ensemble.

Le capteur est constitué d'un corps d'épreuve rigide 10. Ce dernier est muni d'une enveloppe de protection non représentée, cette enveloppe n'altérant pas les propriétés mécaniques du capteur. Par la suite, on pourra assimiler le capteur à son corps d'épreuve rigide 10.

Le capteur comporte une face aval 12 et une face amont 13. Lorsque le capteur est monté dans une structure mécanique externe générant les efforts à mesurer, la face aval 12 est au contact de celle-ci et est orientée vers la partie aval de la structure, et la face amont 13 est au contact de cette même structure, orientée vers sa partie amont. Des trous sont prévus dans ces faces pour permettre la fixation du capteur sur la structure mécanique.

Le corps d'épreuve 10 comporte au moins :

- Une interface aval 2 destinée à rentrer en contact avec la structure mécanique externe, non représentée, via la face aval 12 de l'enveloppe ;
- Une interface amont 3 destinée à rentrer en contact avec la structure mécanique externe via la face amont 13 de l'enveloppe ;
- Un ensemble d'éléments sensibles 1, à base de plaque vibrantes, disposées entre ces deux interfaces, les efforts produits par la structure mécanique étant transmis à ces éléments sensibles par ces interfaces 1, 2.

Ces éléments sensibles 1 sont solidaires mécaniquement des interfaces 2, 3 de façon à former avec ces dernières un ensemble 10 rigide. Ces différentes parties 1, 2, 3 du corps d'épreuve peuvent être en aluminium ou en inox, d'autres matériaux étant bien sûr possibles pourvu qu'ils aient les propriétés mécaniques adéquates.

Les faces de contact 12, 13 des interfaces 2, 3 sont de préférence planes afin d'obtenir le meilleur contact avec la structure mécanique externe.

Les interfaces 2, 3 présentent par exemple des trous, filetés ou non, pour permettre la fixation du capteur sur cette structure.

Dans l'exemple de réalisation des figures 1a à 1d, les éléments sensibles 1 font un angle droit avec le plan des interfaces 2, 3. Il est possible de prévoir un mode de réalisation où cet angle est différent de 90°, donnant au corps d'épreuve 10 un aspect pyramidal, voire plat.

Une des faces aval 12 et amont 13 de l'enveloppe 11 peut être la face d'un capot recouvrant l'interface 2, 3 qu'elle protège, l'enveloppe protectrice non représentée étant alors en fait constituée d'une enveloppe et d'un capot. D'autres formes et types d'enveloppe de protections sont possibles, pourvu qu'elles protègent les composants du capteur et permettent une transmission fiable des efforts produits par la structure externe. Il est également possible de prévoir des modes de réalisation sans enveloppe de protection.

Un élément sensible 1 est formé d'une plaque 21 encastrée dans un cadre 22, ou solidaire mécaniquement de ce dernier, cette plaque étant apte à vibrer sous l'effet d'excitations mécaniques locales. La plaque 21 est équipée de transducteurs.

Plus précisément la plaque 21 est rendue vibrante par des excitations locales produites par des transducteurs, non représentés. Ces transducteurs qui sont par exemple des patchs piézo-électriques, provoquent des vibrations transversales sur la plaque. Dans la suite, on utilisera à titre d'exemple des transducteurs de type piézo-électriques.

Par ces vibrations transversales, la plaque peut entrer en résonance mécanique selon les trois axes d'espaces x, y, z où les axes x et y sont dans le plan de la plaque et l'axe z est perpendiculaire à ce plan.

Les cadres sont disposés régulièrement autour de l'axe 20 du corps d'épreuve 10. La structure ou géométrie de ce dernier est par ailleurs telle qu'elle est invariante par rotation de 120°, plus généralement elle est invariante selon l'angle séparant les points centraux de deux éléments sensibles. Dans l'exemple de réalisation présenté ici, le corps d'épreuve comporte trois éléments sensibles mais il est possible de prévoir un nombre différent dans les limites de réalisation possible.

Le torseur d'effort produit par la structure mécanique externe, c'est-à-dire l'effort à mesurer, est supposé être localisé en un point A d'intersection de l'axe du corps avec l'interface aval. Ce torseur d'effort sera noté par la suite $\overset{o}{F}$, appelé indifféremment effort ou torseur d'effort.

Ce torseur $\overset{o}{F} = [\ F_x,\ F_y,\ F_z,\ M_x,\ M_y,\ M_z\ ]$ est composé de trois composantes de force $F_x$, $F_y$, $F_z$, et de trois composantes de couple $M_x$, $M_y$, $M_z$.

La structure du corps d'épreuve et plus particulièrement des éléments sensibles 1, telle que présentée par les figures 1a à 1d, est optimisée de telle sorte que seules les plaques 21 entrent en résonance, c'est-à-dire que les hautes fréquences de résonance transmises par ces plaques vibrantes au reste du corps d'épreuve sont complètement négligeables et peuvent être ignorées.

La mesure du torseur d'effort est basée sur l'utilisation des plaques vibrantes 21 dont les fréquences et les déformées modales sont sensibles aux efforts externes. En effet, quand un effort quasi-statique $\overset{o}{F}$ est appliqué au point A du corps d'épreuve, il provoque une précontrainte $\overset{o}{\sigma}$ à l'ensemble de la structure du corps d'épreuve. En particulier, cette précontrainte $\overset{o}{\sigma}$ est transmise à chaque plaque résonante 21. Le principe de fonctionnement du capteur réside dans le fait que les fréquences propres et les déformées modales de chaque plaque vibrante dépendent fortement de leurs conditions aux limites, en termes de force et de déplacement. Les propriétés mécaniques des plaques, en termes de rigidité apparentes, sont en effet altérées par cette précontrainte provoquant notamment une modification de la fréquence propre, ou fréquence de résonance. Ainsi, après une étape de calibration du capteur, les mesures de décalages de fréquences propres de chaque plaque 21, dues à l'effort $\overset{o}{F}$, permettent d'estimer cet effort dans toutes ses dimensions comme le montre la suite de cette description.

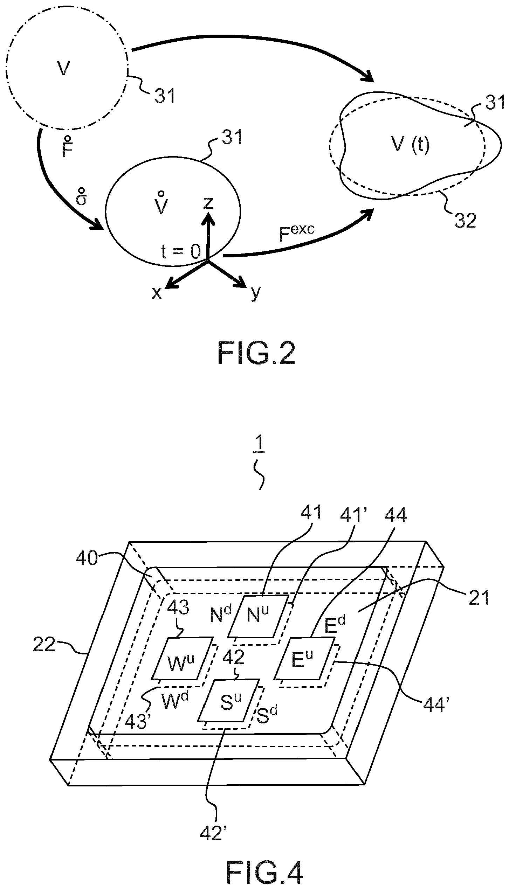

La figure 2 illustre le principe de la détection d'efforts par un capteur résonant. Un corps 31 initialement précontraint est excité par une force $F^{exc}$ générée par effet piézo-électrique par exemple. Cette force d'excitation $F^{exc}$ met le corps 31 en résonances 32. La précontrainte initiale $\overset{o}{\sigma}$ affecte ces résonances.

La figure 2 montre donc le corps 31 dans un état initial V où il n'est pas soumis à un effort. Il est ensuite précontraint par un effort externe $\overset{o}{F}$ et passe dans un état $\overset{o}{V}$. Dans ce nouvel état, correspondant à une phase opérationnelle, l'excitation $F^{exc}$ est appliquée. Cette excitation porte le corps 31 en résonance V(t), la fréquence de résonance étant décalée en raison de la précontrainte $\overset{o}{\sigma}$ appliquée. En d'autres termes, la fréquence de résonance est décalée par rapport à un état sans précontrainte.

Deux types de forces sont à prendre en compte dans ce cas de figure, ces forces étant caractérisées par leurs bandes de fréquences qui sont très éloignées l'une de l'autre :

- La force d'excitation $F^{exc}$ est en hautes fréquences, elle est créée par l'excitation produite par les éléments piézoélectriques qui mettent le corps 31 en résonances, les plaques 21 dans le cas de la présente invention. Les résonances peuvent être obtenues par l'application d'un potentiel électrique Φ aux bornes des éléments piézoélectriques ;

- Les efforts à mesurer $\overset{o}{F}$ sont à une relativement basse fréquence. La relation entre ces efforts et le décalage de fréquence de résonance sont dus à la précontrainte. Dans le cas d'une application robotique par exemple, la bande de fréquences de la précontrainte $\overset{o}{\sigma}$ est très en dessous des fréquences de résonance du corps 31 comme des plaques 21. La précontrainte peut donc être considérée comme quasi-statique.

En notant $Freq\ (\sigma)$ la fréquence de précontrainte et $Freq\ (F^{exc})$ la fréquence de la force d'excitation, nous avons : $Freq\ (\sigma) << Freq\ (F^{exc})$.

Un modèle dynamique d'une plaque vibrante est notamment décrit dans le document de D. Castano-Cano, M. Grossard et A. Hubert : « Multi-axis Force Sensing with Pre-stressed Resonant Composite Plates : An Alternative to Strain Gauge Force Sensors », 2014 IEEE/ASME International Conférence on Advanced Intelligent Mechatronics (AIM), Besançon, France, July 8-11, 2014. Ce modèle est défini par la relation suivante :

$$[M]\begin{Bmatrix}\ddot{U}\\\ddot{\Phi}\end{Bmatrix} + [K]\begin{Bmatrix}U\\\Phi\end{Bmatrix} = \begin{Bmatrix}F^{exc}\\Q\end{Bmatrix} \qquad (1)$$

où $[M]$ est la matrice de masse et $[K]$ la matrice de raideur, $U$ est le déplacement d'un nœud d'une structure maillée, $\Phi$ est le potentiel électrique aux bornes des électrodes d'un élément piézoélectrique, $F^{exc}$ est la force d'excitation qui produit les vibration de la plaque et $Q$ est la charge électrique sur les électrodes de l'élément piézoélectrique.

La matrice de masse et la matrice de raideur sont définies par les relations suivantes :

$$[M] = \begin{bmatrix} M & 0 \\ 0 & 0 \end{bmatrix} \qquad (2a)$$

$$[K] = \begin{bmatrix} K_g\left(\overset{o}{\sigma}\right) + K_{UU} & K_{U\Phi} \\ K_{\Phi U} & K_{\Phi\Phi} \end{bmatrix} \qquad (2b)$$

où $[K_{UU}]$ est la matrice de raideur mécanique, $[K_{U\Phi}] = [K_{\Phi U}]^T$ est la matrice de couplage électromécanique et $[K_{\Phi\Phi}]$ est la matrice de capacitance. La matrice de raideur $[K]$ comporte également la matrice $\left[K_g\left(\overset{o}{\sigma}\right)\right]$ qui est la matrice de raideur géométrique qui prend en compte l'effort à mesurer **F** via la précontrainte induite $\overset{o}{\sigma}$, comme une variation apparente de raideur.

A partir de la relation (1), la fréquence de résonance est obtenue par le calcul de $[M]^{-1}[K]$.

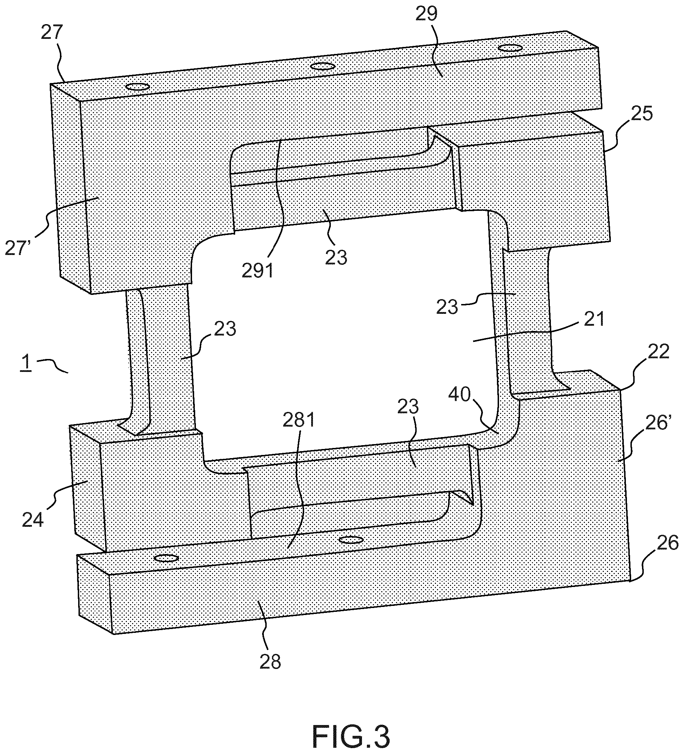

La figure 3 présente par une vue en perspective un exemple de réalisation d'un élément sensible 1, composé d'une plaque 21 et d'un cadre 22, la zone proprement sensible de l'élément étant la plaque 21.

Le cadre 22 est lui-même constitué d'un cadre de base 23 prolongé :

- par deux parties massives 24, 25 à deux coins opposés, réalisant une augmentation de masse locale au niveau de ces deux coins ;
- par deux autres parties massives 26, 27 aux deux autres coins, chacune de ces parties massives étant constituée d'une base 26', 27' prolongée par une poutrelle 28, 29 parallèle au cadre de base via un coude 121, 122, l'ensemble réalisant une augmentation de masse locale ;

Les angles intérieurs 40 du cadre de base sont par exemple arrondis.

Le cadre est fixé aux interfaces 2, 3 en deux coins opposés 26, 27, le cadre de base 23 étant parallèle à la surface des deux interfaces.

Dans un exemple de réalisation, le cadre 22 est fixé aux interfaces 2, 3 par l'intermédiaire des poutrelles 28,29 qui sont encastrées dans les interfaces.

Les figures 1a à 1d, et plus particulièrement les figures 1c et 1d illustrent cet exemple de fixation au moyen des poutrelles. Des évidements sont réalisés dans les interfaces 2, 3 pour encastrer les poutrelles. Les poutrelles sont totalement encastrées de sorte que la face 281, 291 d'une poutrelle qui est en regard du cadre de base soit au même niveau que la surface de l'interface. En d'autres termes cette surface 281, 291 de la poutrelle prolonge la surface de l'interface. Le mode de fixation est le même du côté de l'interface aval 2 et du côté de l'interface amont 3.

La structure de la partie sensible 1, plus particulièrement de la plaque 21 et du cadre 22 sera décrite plus en détail par la suite.

La figure 4 complète la description d'un élément sensible en présentant la façon dont la plaque 21 est équipée de transducteurs. Pour simplifier la représentation, le cadre 22 est représenté par son cadre de base.

Des transducteurs sont fixés sur la plaque 21. Ces transducteurs ont pour fonction d'exciter la plaque 21 en des endroits particuliers de celle-ci. Les transducteurs sont donc situés en ces endroits particuliers. Dans un mode de mise en œuvre préféré de l'invention, les transducteurs sont des éléments piézo-électriques ayant la forme de patchs. Dans toute la suite de la description, les transducteurs utilisés seront donc à titre d'exemple des patchs piézo-électriques. Dans l'exemple de la figure 4, quatre patchs piézo-électriques 41, 42, 43, 44 sont fixés sur une face de la plaque 21, dite face de dessus. Ces patchs sont destinés à exciter la plaque. Des patchs piézo-électriques 41', 42', 43', 44' sont par exemple situés sur l'autre face de la plaque, en regard des patchs du dessus, ces patchs du dessous produisent un signal de charge permettant de mesurer les fréquences de résonances de la plaque, ces patchs ayant donc une fonction d'observation pour capter les fréquences de résonance.

Le cadre 22 empêche la transmission des hautes fréquences vers le reste de la structure du corps d'épreuve et transmet à la plaque 21 les effets de la précontraintes dus à l'effort externe, ces effets étant à basses fréquences. En d'autres termes, le cadre 22 agit comme un filtre pour les hautes fréquences, lorsque les fréquences de résonance sont produites sur la plaque 21, et permet dans le même temps que l'effort quasi-statique soit transmis à cette même plaque.

Un potentiel électrique $\Phi$ est appliqué sur les électrodes des patchs piézoélectriques 41, 42, 43, 44 de la face supérieure pour mettre la plaque en vibration. Les charges électriques Q sont mesurées sur les électrodes des patchs 41', 42', 43', 44' de la face inférieure pour obtenir des signaux fréquentiels et donc mesurer la fréquence de résonance.

La figure 4 présente un mode de réalisation avec une plaque 21 équipée de quatre patchs piézoélectriques. Ce mode de réalisation sera conservé, à titre d'exemple, pour la suite de la description. Il est bien sûr possible de prévoir un nombre différents de patchs. On peut par exemple prévoir une plaque équipée de six patchs.

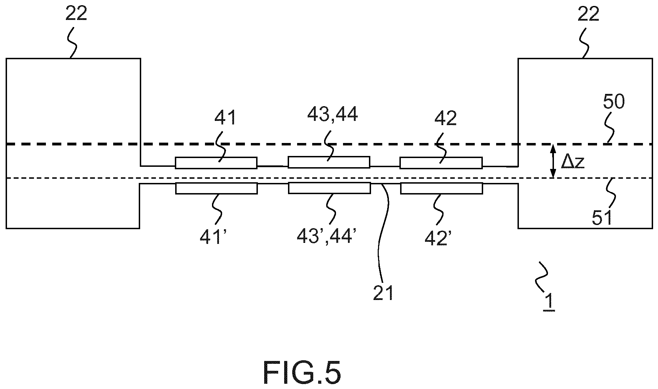

La figure 5 présente un mode de réalisation particulièrement avantageux d'un élément sensible 1, par une vue en coupe. Plus particulièrement, la figure 5 présente une configuration où la plaque 21 n'est pas positionnée au niveau de la fibre neutre 50 de l'ensemble constitué du cadre et de la plaque. La fibre neutre se définit comme la fibre unique qui ne subit aucune variation de longueur, quelle que soit la flexion de l'ensemble. Ainsi, dans le cas d'un effort hors plan induisant une flexion pure de la plaque, il n'existe pas de précontrainte dans le plan sur l'axe de la fibre neutre. La plaque 21 est située à un niveau 51 faisant un écart $\Delta z$ avec la fibre neutre. Dans ce mode de réalisation avantageux, les patchs piézo-électriques ne sont pas sensibles aux précontraintes induites.

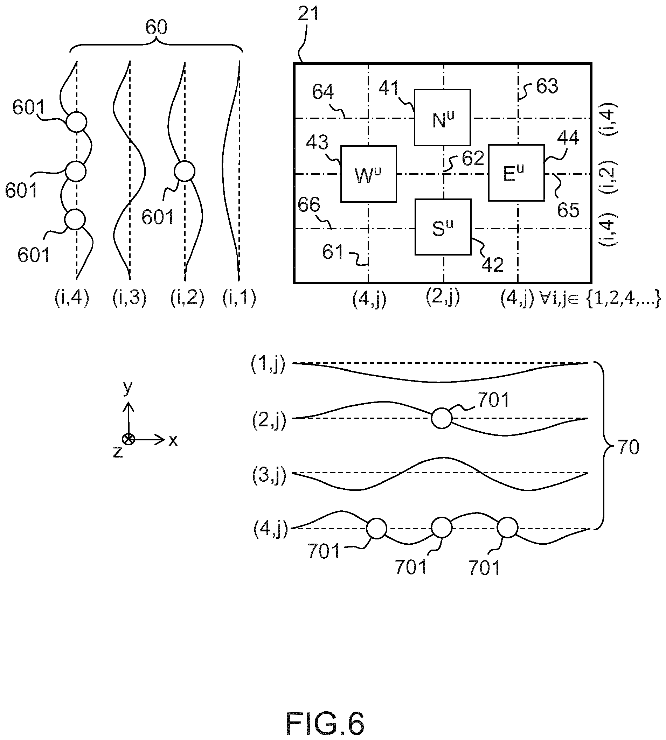

La figure 6 illustre un placement particulier des patchs 41, 42, 43, 44 sur la plaque 21 et les premiers modes d'excitation produit par ce placement particulier, ou configuration particulière, des patchs. Les modes d'excitation sont représentées par les profils de leurs déformées, représentés en regard de leurs lignes nodales sur la plaque 21.

Comme cela sera montré par la suite, une structure d'élément sensible, telles qu'illustrée par les figures 3 ou 4, avec un placement particulier des patchs piézo-électriques, couplé à une stratégie de commande judicieuse de ces patchs, permet d'obtenir un capteur multidimensionnel performant.

La capacité d'un patch à contrôler, exciter ou d'observer, une fréquence de résonance de la plaque est directement liée à son placement relatif par rapport à chaque ligne nodale. La façon dont sont positionnés les patchs caractérise la commandabilité et l'observabilité modales de la plaque. En particulier, le placement des patchs sur la ligne nodale d'une fréquence de résonance sélectionnée conduit à leurs insensibilités aux modes correspondants, et agit comme un filtre spatial modal.

La figure 6 présente une plaque 21 dans un plan x, y avec les lignes nodales 61, 62, 63, 64, 65, 66 correspondant aux différents modes de vibration. Les différents modes de vibration 60, 70 sont illustrés en regard des lignes nodales. Plus particulièrement, le nœud 701 du mode (2, j) selon l'axe x est représenté en regard de la ligne nodale 62, de même les nœuds 701 du mode (4, j) sont représentés en regard des lignes nodales 61, 62, 63. Il en de même pour la représentation des modes (i, 2) et (i, 4) selon y, et de leurs nœuds 601, en regard des lignes nodales 64, 65, 66. Les rangs i et j peuvent être quelconques.

De façon conventionnelle, le patch 41 situé en haut de la vue est appelé patch Nord. Les deux patchs 43, 44 au-dessous sont appelés respectivement patch Ouest et patch Est conformément à leur position par rapport au patch nord, et le quatrième patch 42 est appelé patch Sud. Seuls sont représentés les patchs 41, 42, 43, 44 d'excitation, les patchs d'observation 41', 42', 43', 44' étant placés sur l'autre face avec les même règles d'orientation.

Les patchs Nord et Sud sont placés sur l'axe de symétrie 62 selon y de la plaque et les patchs Ouest et Est sont placés sur l'axe de symétrie 65 selon x. Les patchs Nord et Sud sont placés symétriquement par rapport à l'intersection des deux axes 62, 65. Il en est de même pour les patchs Ouest et Est.

Dans cette configuration, les patchs Nord et Sud sont centrés sur la ligne nodale 62 du mode (2, j), les patchs Ouest et Est sont centrés sur deux lignes nodales 61, 63 du mode (4, j), de chaque côté de la ligne nodale précédente 62. Les patchs Ouest et Est sont centrés sur la ligne nodale 65 du mode (i, 2), les patchs Nord et Sud sont centrés sur deux lignes nodales 64, 66 du mode (i, 4), de chaque côté de la ligne 65 précédente.

La configuration illustrée par la figure 6 permet d'effectuer un filtrage spatial des modes (i, j) de la plaque qui ont au moins un rang, i ou j, égal à 2 ou à 4. En particulier, les patchs Nord et Sud sont insensibles au mode (2, j) car centrés sur la ligne nodale de ce mode, c'est-à-dire que ces patchs sont incapables d'activer et/ou de mesurer ce mode.

La suite de la description sera réalisée avec cette configuration, d'autres configurations étant possibles.

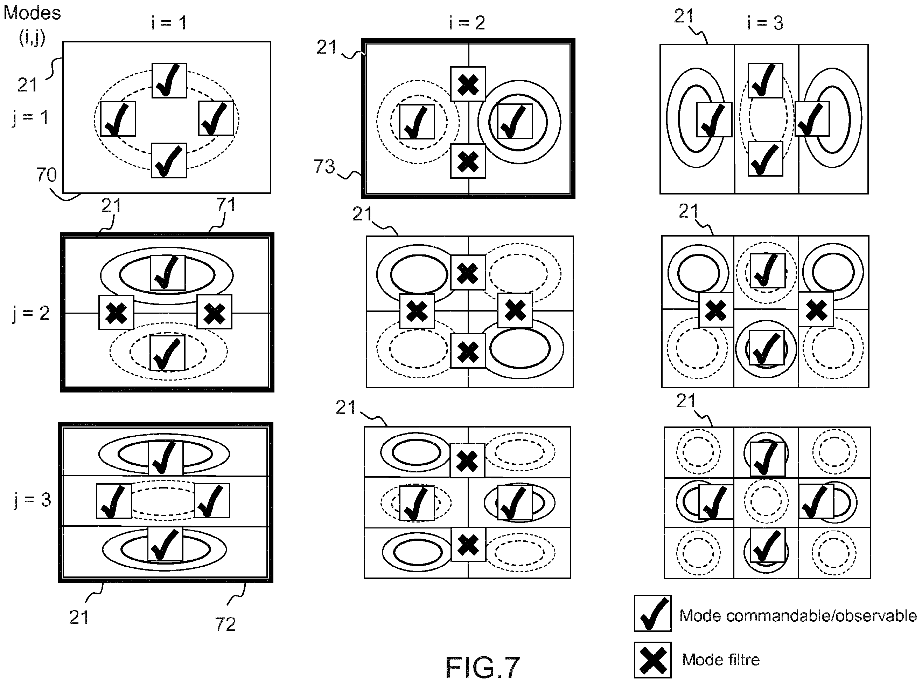

La figure 7 illustre cette propriété de filtre spatial d'un capteur selon l'invention. Plus particulièrement, elle illustre le filtrage spatial obtenu pour les différents modes, neuf modes étant représentés correspondant aux rangs i = 1 à 3 et j = 1 à 3. Les patchs Nord, Sud, Ouest, Est sont représentés avec chacun une indication de leur état. Le signe V précise que le patch est dans un mode commandable ou observable, c'est-à-dire qu'il peut exciter le mode (i, j) ou le mesurer. Une croix indique que le patch fait fonction de filtre pour le mode (i, j), c'est-à-dire qu'il est insensible pour ce mode, ne pouvant ni l'exciter ni le mesurer. En considérant que les patchs Nord et Sud forment un premier groupe de patchs et que les patchs Ouest et Est forment un deuxième groupe de patchs, la figure 7 montre notamment que :

- Les modes avec i = 2 ou j = 2 sont partiellement filtrés, ce qui signifie qu'un groupe de patchs ne peut pas activer ou mesurer ces mode ;
- Le mode (2, 2) est totalement filtré, c'est-à-dire que tous les patchs sont incapables d'activer ou de mesurer ces modes.

On pourrait montrer de même que les modes avec i = 4 ou j = 4 sont totalement filtrés.

Le filtrage est obtenu en plaçant les patchs sur les lignes nodales de façon symétrique, comme illustré par l'exemple de la figure 6.

Un placement des patchs piézo-électriques, du type de cet exemple, permettant de filtrer des fréquences de résonances apporte des avantages. Cela permet notamment de limiter les composants électroniques pour le traitement des signaux.

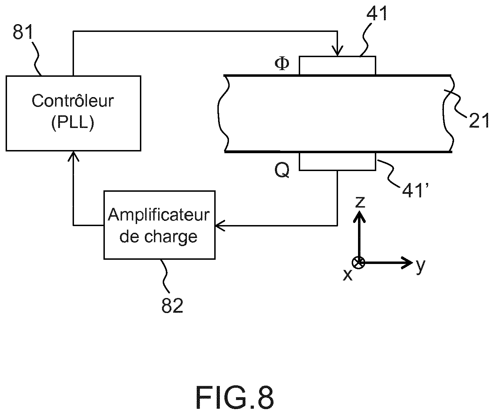

La figure 8 illustre par une vue en coupe un exemple de module de contrôle d'un patch piézo-électrique 41 pouvant être utilisé dans un capteur selon l'invention. Le principe de la mesure d'effort reposant sur le décalage de fréquence de résonance produit par la précontrainte induite, le module comporte un circuit à verrouillage de phase 81, encore appelé circuit PLL, contrôlant la phase du signal à la fréquence de résonance de la plaque, en boucle fermée. Les fréquences de résonances sont pistées en utilisant une référence de phase $\Delta\Phi_{ref} = \pi/2$, car pour les patchs co-localisés 41, 41', la résonance est caractérisée par une différence de phases de $\pi/2$ entre le signal d'entrée du patch d'excitation 41 et le signal de sortie du patch d'observation 41'. Le circuit PLL permet ainsi de mesurer les décalages de fréquences de résonance, notamment dus aux précontraintes subies par la plaque. Un amplificateur 82 peut amplifier par exemple les signaux entre la sortie du patch d'observation 41' et le circuit PLL.

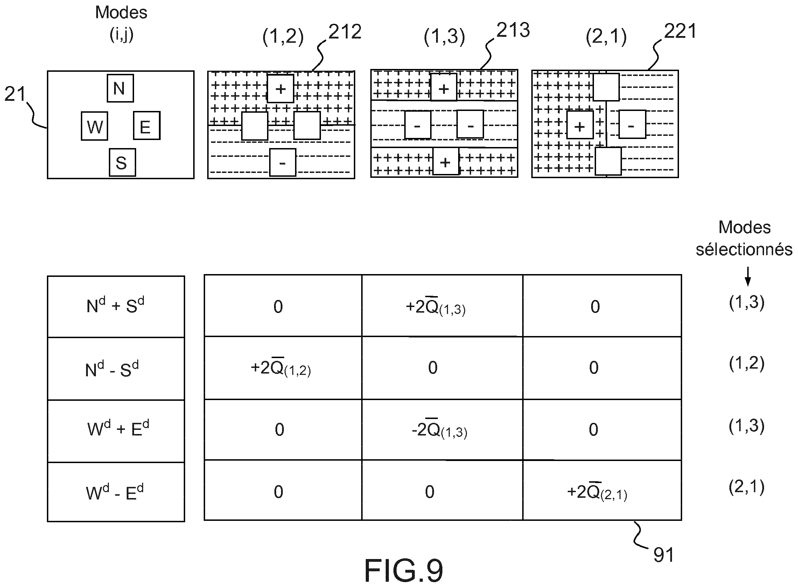

La figure 9 illustre un exemple de stratégie de commande des patchs avec trois modes d'excitation particuliers. Les modes d'excitation retenus sont les modes (1, 2), (1,3), (2, 1) dont les états 71, 72, 73 sont représentés en figure 7. Il est bien sûr possible de sélectionner d'autres modes, en plaçant les transducteurs et capteurs en d'autres endroits de la plaque et en effectuant d'autres combinaisons que les additions et soustractions de l'exemple donné ici. Plus généralement, on peut effectuer toutes combinaisons linéaires sur les signaux résonants captés, la combinaison linéaire identité étant bien sûr possible.

Par exemple, l'estimation simultanée de trois composantes de force $\overset{o}{F}_x$, $\overset{o}{F}_y$, $\overset{o}{F}_z$, nécessite de mesurer en même temps les décalages de fréquences de trois modes résonant. Cette superposition des modes est implémentée dans un capteur selon l'invention en utilisant trois signaux sinusoïdaux centrés sur les fréquences de résonance sélectionnées, qui sont appliqués aux différents patchs d'activation. Les fréquences de résonance utilisées sont par exemple celles de trois modes (1, 2), (1,3), (2, 1). Les trois excitations appliquées par exemple sur les patchs d'excitation Nord ($N^u$), Ouest ($W^u$) et Sud ($S^u$) peuvent être décrites par l'ensemble de relations suivant :

$$\begin{cases} \Phi^{N^u}_{(1,2)} = \overline{\Phi}^{N^u}_{(1,2)} \sin(\omega_{(1,2)}\, t\,) \\ \Phi^{W^u}_{(2,1)} = \overline{\Phi}^{W^u}_{(2,1)} \sin(\omega_{(2,1)}\, t\,) \\ \Phi^{S^u}_{(1,3)} = \overline{\Phi}^{S^u}_{(1,3)} \sin(\omega_{(1,3)}\, t\,) \end{cases} \qquad (3)$$

où $\Phi^{X^u}_m$' est l'amplitude de la sinusoïde appliqué au patch $X^u$ pour le mode m, $X^u$ étant $N^u$, $W^u$ ou $S^u$, m étant le mode (1, 2), (1,3) ou (2, 1).

La réponse d'une plaque 21 à cet ensemble d'excitations simultanées génère des charges électriques sur les électrodes des patchs d'observation. Le signal de chaque électrode peut être exprimé comme la superposition des contributions de tous les signaux d'excitation. On note $\overline{Q}^{X^{u,d}}_m$ la charge en un point sur les électrodes d'un patch $X^{u,d}$ pour un mode m, $X^{u,d}$ étant l'un quelconque des patchs d'excitation Nord ($N^u$), Ouest ($W^u$), Est ($E^u$) et Sud ($S^u$) ou des patchs d'observation Nord ($N^d$), Ouest ($W^d$), Est ($E^d$) et Sud ($S^d$).

La charge globale $Q^{X^{u,d}}$ sur les électrodes d'un patch $X^{u,d}$ peut être donnée par la relation suivante, $\mathcal{M}$ étant l'ensemble des modes (1, 2), (1,3) ou (2, 1) :

$$Q^{X^{u,d}} = \sum_{m \in \mathcal{M}} \overline{Q}^{X^{u,d}}_m \sin\left(\omega_m\, t + \Delta\phi_m(X^{u,d})\right) \qquad (4)$$

L'amplitude du signal de charge donné par cette relation (4) présente quelques propriétés basées sur les déformées modales :

1. Lorsqu'un patch $X^{u,d}$ est placé sur une ligne nodale pour un mode m, il en résulte que $\overline{Q}^{X^{u,d}}_m = 0$ ;

2. Pour deux patchs géographiquement opposés, c'est-à-dire Nord/Sud ou Ouest/Est, qui ne sont pas sur une ligne nodale pour un mode m, le signe de l'amplitude de charge $\overline{Q}^{X^{u,d}}_m$ dépend de la parité du rang du mode, j pour les patchs Nord et Sud et i pour les patchs Ouest et Est, en particulier :

$$\bar{Q}_m^{\mathrm{N}^{\mathrm{u,d}}} = (-1)^{j+1}\bar{Q}_m^{\mathrm{S}^{\mathrm{u,d}}} \quad \text{et} \quad \bar{Q}_m^{\mathrm{W}^{\mathrm{u,d}}} = (-1)^{j+1}\bar{Q}_m^{\mathrm{E}^{\mathrm{u,d}}} \tag{5}$$

En exploitant ces deux propriétés, des stratégies de commande peuvent être réalisées entre les signaux pour extraire une seule composante modale. Ces stratégies de commande peuvent être réalisées simplement par additions et soustractions comme l'illustre la figure 9.

La figure 9 illustre plus particulièrement la façon d'extraire les signaux mesurés pour chacun des modes (1, 2), (2, 1) et (1, 3). Selon l'invention, alors que ces modes sont excités simultanément par exemple, on réalise des opérations d'additions ou de soustractions entre les signaux issus des patchs d'observation $\mathrm{N^d}$, $\mathrm{S^d}$, $\mathrm{W^d}$ et $\mathrm{E^d}$. Un tableau 91 montre les résultats obtenus pour chaque opération et pour chaque mode, tenant compte des deux propriétés ci-dessus. Pour chaque colonne du tableau, correspondant à un mode, on précise par une représentation 211, 212, 213 le signe du signal de charge capté par les patchs. S'ils sont insensibles au mode, les patchs sont représentés par un carré noir. Ainsi pour le mode (1, 2) dont le profil est notamment illustré par la figure 6, le signal sur le patch $\mathrm{N^d}$ est positif et le signal sur le patch $\mathrm{S^d}$ est négatif. Il s'agit d'une représentation 211 à un instant donné, ces signes pouvant être inversés à un autre instant, la représentation 212 symbolisant le fait que les signes sont opposés entre les deux patchs $\mathrm{N^d}$ et $\mathrm{S^d}$. Les autres patchs $\mathrm{W^d}$ et $\mathrm{E^d}$ qui sont à l'état « insensible » dans le mode (1, 2) sont représentés par un carré noir. Le principe de représentation étant le même pour les représentations 213, 221 des autres modes.

La première ligne du tableau 91 présente les résultats d'une première opération. Cette première opération réalise la somme du signal de charge du patch Nord $\mathrm{N^d}$ et du signal de charge du patch Sud $\mathrm{S^d}$, opération notée $\mathrm{N^d} + \mathrm{S^d}$. Compte-tenu des états des patchs symbolisées par les différentes représentations 212, 213, 221 et des propriétés 1 et 2 précédentes, il s'ensuit que seul le mode (1, 3) est sélectionné, le signal de charge étant égal à $+2Q_{(1, 3)}$. On montre de même que :

- Le mode (1, 2) est sélectionné par l'opération $\mathrm{N^d} - \mathrm{S^d}$ ;
- Le mode (1, 3) est également sélectionné par l'opération $\mathrm{W^d} + \mathrm{E^d}$ ;
- Le mode (2, 1) est sélectionné par l'opération $\mathrm{W^d} - \mathrm{E^d}$. ;

On remarque que le mode (1, 3) peut être sélectionné par deux opérations, $\mathrm{N^d} + \mathrm{S^d}$ et $\mathrm{W^d} + \mathrm{E^d}$. Cette redondance peut avantageusement être utilisée pour vérifier la validité de la méthode de mesure, les deux signaux $\mathrm{N^d} + \mathrm{S^d}$ et $\mathrm{W^d} + \mathrm{E^d}$ devant être en opposition de phase. Les signaux en sorties des opérations sont connectés à un circuit PLL du type de la figure 8, pour la mesure de ces signaux.

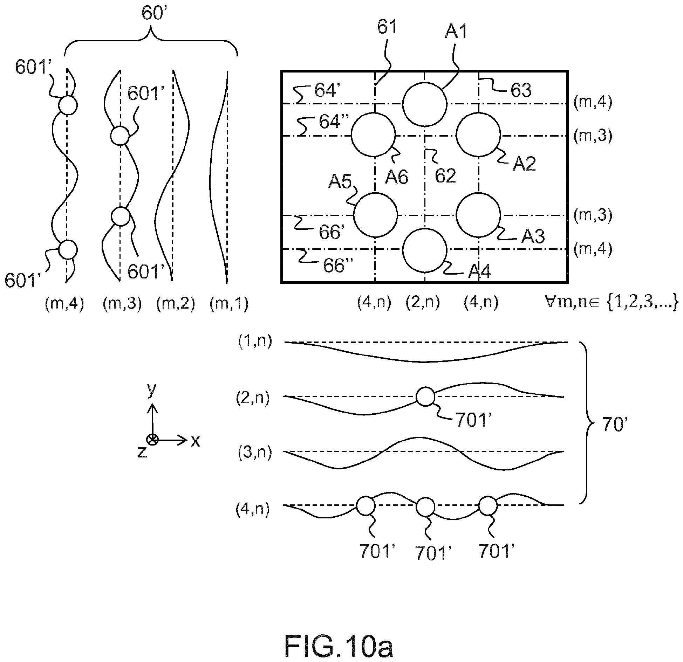

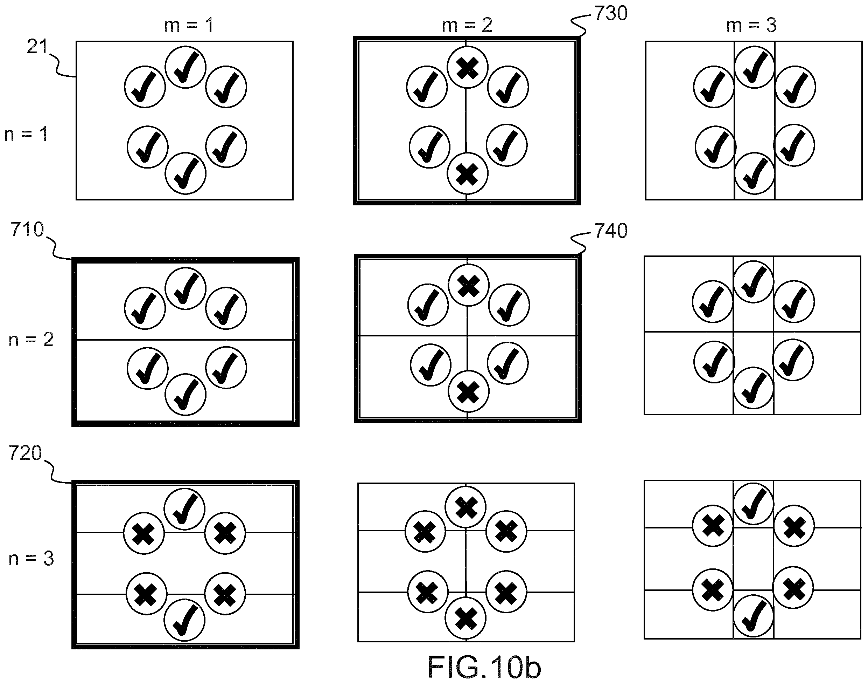

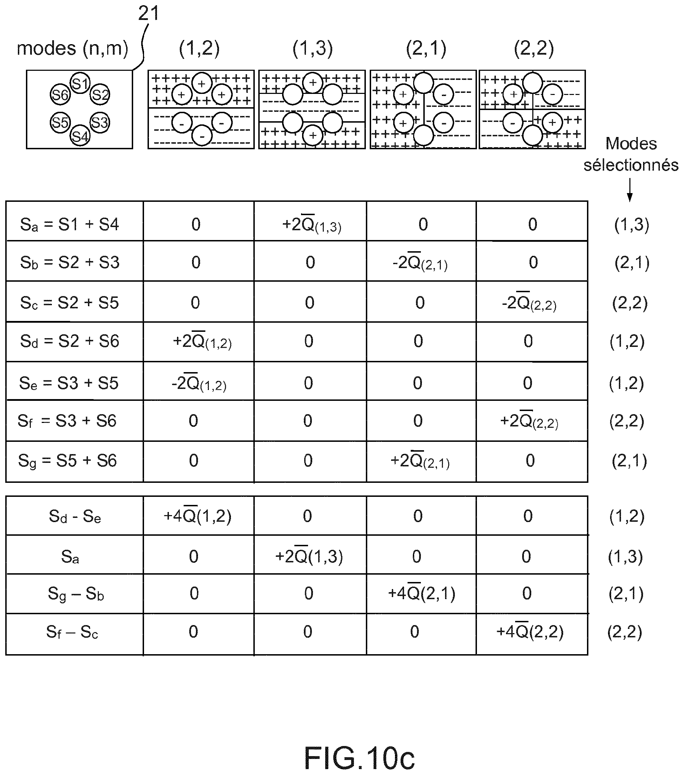

Les figures 10a, 10b et 10c présentent un autre exemple de réalisation dans lequel la plaque 21 est équipée de six patchs A1, A2, A3, A4, A5, A6.
Deux patchs A1, A4 sont placés sur un premier axe de symétrie 62 et disposés symétriquement par rapport au deuxième axe de symétrie 65 (non représenté sur la figure 10b). Les quatre autres patchs sont disposés de part et d'autre de ces axes de symétrie 62, 65 de telle façon que l'ensemble des six patchs forme un hexagone.
Comme dans le cas à quatre patch illustré par la figure 6, la figure 10a montre les lignes nodales 61, 62, 63, 64', 64", 66', 66" correspondant aux différents modes de vibration. Les différents modes de vibration 60', 70' sont illustrés en regard des lignes nodales, les nœuds 601', 701' des modes vibratoires étant disposés en regard des lignes nodales.
Sur le même principe que le cas à quatre patchs illustré par la figure 7, la figure 10b illustre la propriété de filtrage spatial, neuf modes étant représentés correspondant aux rangs n = 1 à 3 et m = 1 à 3.

Le signe V précise que le patch est dans un mode commandable ou observable, c'est-à-dire qu'il peut exciter le mode (n, m) ou le mesurer. Une croix indique que le patch fait fonction de filtre pour le mode (n, m), c'est-à-dire qu'il est insensible pour ce mode, ne pouvant ni l'exciter ni le mesurer. La figure 10c, comme la figure 9, illustre un exemple de stratégie de commande des patchs. Dans le cas de la figure 10c, à six patchs, quatre modes d'excitation sont retenus, ces modes étant les modes (1, 2), (1, 3), (2,1) et (2, 2) dont les états 710, 720, 730, 740 sont représentés en figure 10b.

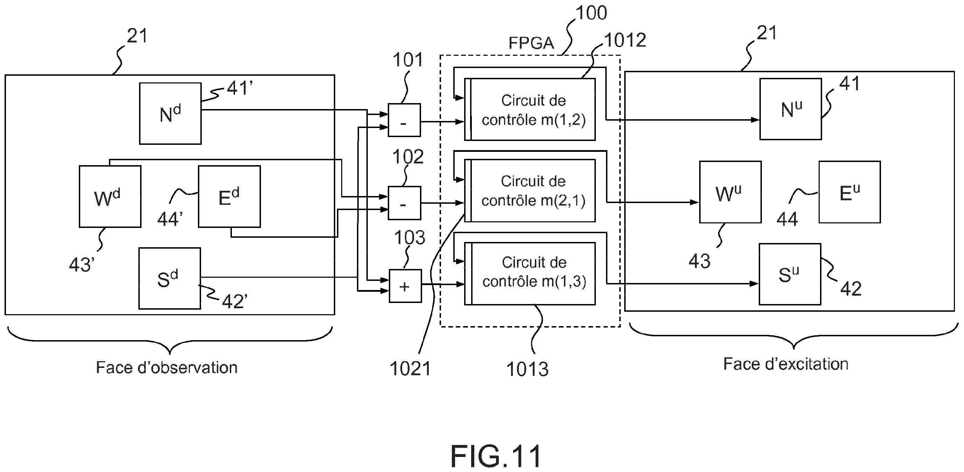

La figure 11 illustre, dans un cas d'application à quatre patchs, un exemple de configuration de la connexion des sorties des patchs d'observation 41', 42', 43', 44' produisant les résultats des opérations précédentes, avec la superposition des modes (1, 2), (2, 1) et (1, 3). Les sorties des patchs $\mathrm{N^d}$ et $\mathrm{S^d}$ sont connectées aux deux entrées d'un premier soustracteur 101 et aux deux entrées d'un additionneur 103. Les sorties des patchs $\mathrm{W^d} + \mathrm{E^d}$ sont connectées aux entrées d'un deuxième soustracteur 102. La sortie du premier soustracteur sélectionnant la fréquence de résonance du mode (1, 2) est reliée à l'entrée d'un premier circuit de contrôle 1012. De même, la sortie du deuxième soustracteur sélectionnant la fréquence de résonance du mode (2, 1) est reliée à l'entrée d'un deuxième circuit de contrôle 1021 et la sortie de l'additionneur sélectionnant la fréquence de résonance du mode (1, 3) est reliée à l'entrée d'un troisième circuit de contrôle 1013. Les circuits de contrôle 1012, 1021, 1013 sont formés d'un circuit PLL 81 et d'un amplificateur 82 comme dans la figure 8. Les sorties des premier, deuxième et troisième circuits sont connectées respectivement aux patchs $\mathrm{N^u}$, $\mathrm{W^u}$ et $\mathrm{S^u}$ de la face opposée de la plaque, et rebouclent sur l'entrée des PLL. Les circuits de contrôle sont par exemple intégrés dans un FPGA 100.

On se place dans l'exemple de réalisation d'un capteur où le corps d'épreuve 10 comporte trois zones sensibles 1, donc trois plaques 21 conformément aux figures 1a à 1d et 2a et 2b. On note {Δf$_i$} la matrice des décalages de fréquences de résonance de la i$^{ème}$ plaque i étant égal à 1, 2 ou 3. On reste dans l'exemple ci-dessus où les trois fréquences de résonance sont celles des modes (1, 2), (1, 3), (2, 1), mesurées conformément à la figure 11 par exemple. {Δf$_i$} est une matrice colonne, ou vecteur, dont les composantes sont les décalages de ces trois fréquences de résonance. En considérant que les fréquences de résonance varient linéairement en fonction des efforts à mesurer, la relation entre les décalages de fréquence et les composantes d'efforts à mesurer, pour la i$^{ème}$ plaque, est donnée par la relation suivante :

$$\{\Delta f_i\} = [C]_i \left\{ \overset{o}{F} \right\} \tag{6}$$

où $\left\{ \overset{o}{F} \right\}$ est une matrice colonne constituée des composantes d'effort à mesurer et $[C]_i$ est la matrice caractéristique de la i$^{ème}$ plaque :

$$[C]_i = \begin{bmatrix} c^i_{(1,2),x} & c^i_{(1,2),y} & c^i_{(1,2),z} \\ c^i_{(2,1),x} & c^i_{(2,1),y} & c^i_{(2,1),z} \\ c^i_{(1,3),x} & c^i_{(1,3),y} & c^i_{(1,3),z} \end{bmatrix}_i$$

La matrice $[C]_i$ est fonction des modes vibratoires (1, 2), (1, 3) et (2, 1). Pour identifier chaque composant de la matrice $[C]_i$, une calibration expérimentale ou par simulation peut être effectuée selon chacun des trois axes x, y et z. Chaque composante selon x, y, et z de la force à mesurer $\overset{o}{F}$ est alors appliquée successivement. On obtient ainsi successivement les composantes

$$[c^i_{(1,2),x}, \, c^i_{(2,1),x}, \, c^i_{(1,3),x}]^\mathsf{T} \; ;$$

$$[c^i_{(1,2),y}, \, c^i_{(2,1),y}, \, c^i_{(1,3),y}]^\mathsf{T} \; ;$$

et

$$[c^i_{(1,2),z}, \, c^i_{(2,1),z}, \, c^i_{(1,3),z}]^\mathsf{T}$$

de la matrice $[C]_i$.

Ainsi, chaque colonne de la matrice est caractérisée séparément.

Pour obtenir l'ensemble des composantes d'efforts dans les six dimensions, c'est-à-dire les trois composantes de forces et les trois composantes de couples, on utilise la matrice caractéristique du corps d'épreuve 10. Cette matrice caractéristique $[C]$ de l'ensemble du corps d'épreuve, tenant compte de l'ensemble des plaques résonantes 21 peut être obtenue à partir des matrices caractéristiques $[C]_i$ de chaque plaque.

A partir de cette matrice $[C]$ on peut obtenir l'ensemble des composantes selon la relation suivante :

$$\{\Delta f\} = [C] \left\{ \overset{o}{F} \right\} \tag{7}$$

où {Δf} est la matrice colonne composée des décalages de fréquences mesurées sur toutes les plaques, conformément à la figure 11 par exemple. Connaissant les matrices $[C]$ et {Δf} on peut en déduire la matrice d'effort, ou vecteur d'effort

$\{\overset{o}{F}\}$ dont les composantes sont les composantes d'efforts à mesurer. Le capteur selon l'invention comporte des moyens de calcul permettant d'extraire les composantes de ce vecteur. Ces moyens de calcul peuvent être intégrés dans le FPGA 100 ou sur un circuit imprimé par exemple comportant le FPGA 100, tous types d'implantation adéquate pouvant être utilisés.

Pour obtenir une mesure d'effort selon les six dimensions, c'est-à-dire selon les trois composantes des forces et les trois composantes de couple, il faut que le corps d'épreuve 10 comporte au moins deux plaques résonantes 21, chaque plaque pouvant fournir trois dimensions, en raison du fait qu'elle présente plusieurs résonances pour des sollicitations dans les trois dimensions x, y, z.

Dans l'exemple présent où le corps d'épreuve comporte trois plaques, la matrice [C] est la matrice transposée des trois matrices $[C]_i$ concaténées, soit :

$$[C] = [C_1, C_2, C_3]^{\mathrm{T}} \qquad (8)$$

La matrice $\{\Delta f\}$ des décalages de fréquence est la concaténation des trois matrices colonne $\Delta f_1, \Delta f_2, \Delta f_3$ des décalages de fréquences mesurés sur les trois plaques.

Il est à noter que le torseur externe $\overset{o}{F}$ à mesurer, appliqué au point A, a six composantes comme suit :

$$\overset{o}{F} = [\ F_x,\ F_y,\ F_z,\ M_x,\ M_y,\ M_z\ ]$$

Ses trois premières composantes sont de pures composantes de force alors que les trois autres composantes sont de pures composantes de couple. Ainsi, l'identification des coefficients de la matrice [C] permet de corréler directement et simultanément les informations quantitatives sur l'ensemble des composantes de force et de couple de tous les décalages de fréquence mesurés. Cette étape d'étalonnage doit être faite par la suite avant utilisation du capteur.

Dans l'exemple ci-dessus, la matrice [C] n'est pas carrée mais est de dimension 9x6, c'est-à-dire comportant 9 lignes et 6 colonnes, le vecteur $\{\Delta f\}$ ayant 9 composantes, qui sont les 9 mesures de décalages obtenues sur l'ensemble des trois plaques, et le vecteur $\{\overset{o}{F}\}$ est un vecteur ayant 6 composantes, qui sont les six composantes d'efforts.

On ne peut donc pas obtenir le vecteur $\{\overset{o}{F}\}$ recherché par une simple inversion de matrice, la matrice [C] n'étant pas inversible.

Plusieurs solutions peuvent être envisagées pour extraire ce vecteur $\{\overset{o}{F}\}$. On peut en particulier utiliser la matrice pseudo inverse $[C]^+$ définie selon la relation suivante :

$$[C]^+ = (C^{\mathrm{T}}C)^{-1}C^{\mathrm{T}}$$

$C^{\mathrm{T}}$ étant la matrice transposée de [C].

On obtient alors le vecteur $\{\overset{o}{F}\}$ recherché selon la relation suivante :

$$\left\{\overset{o}{F}\right\} = [C]^+\{\Delta f\} \qquad (9)$$

Dans le présent exemple, on obtient plus de mesures de décalages de fréquences que nécessaire. On obtient en effet 9 mesures pour 6 composantes. Cependant, cette redondance peut être avantageusement utilisée pour améliorer le conditionnement numérique des moyens de calcul.

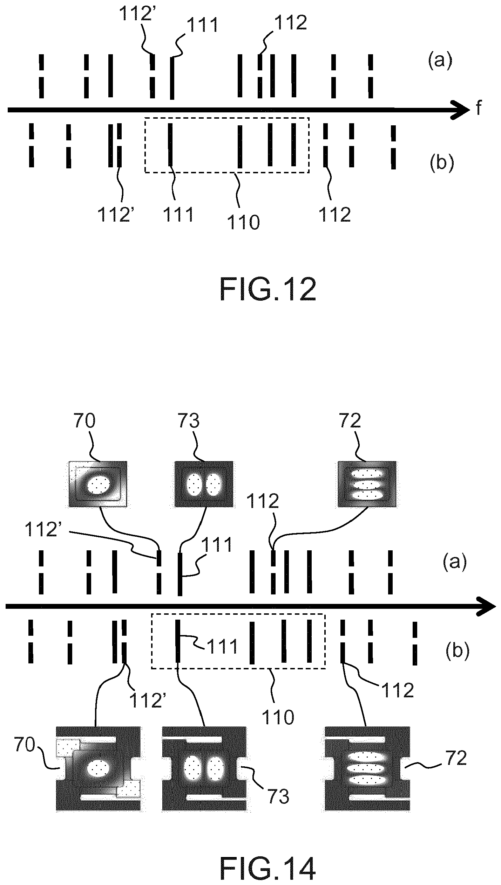

La figure 12 illustre un problème qui peut survenir en relation avec certaines structures d'éléments sensibles 1. La partie (a) de la figure située au dessus d'un axe des fréquences illustre ce problème. Elle représente des fréquences de résonance d'intérêt 111, représentées en traits continus, et des fréquences de résonance parasites 112, représentées en traits discontinus. Ces fréquences parasites sont en fait des fréquences non désirées. Les fréquences d'intérêt sont les fréquences de résonance propres à la plaque 21, fréquences désirées, où les déplacements de la déformée modale sont concentrés sur la plaque. Dans l'exemple de la figure 12(a), les fréquences de résonance parasites sont proches des fréquences de résonance d'intérêt et viennent en quelque sorte polluer ces dernières. Avec ces pollutions, le capteur risque de présenter des défauts, notamment des comportements non linéaires ou imprédictibles comme cela sera expliqué par la suite.

Pour assurer un bon fonctionnement du capteur, il est nécessaire d'avoir une fenêtre fréquentielle ne comportant que des fréquences de résonance d'intérêt, dégagée des fréquences parasites. La partie (b) de la figure 12 présente une telle fenêtre 110. Dans cette fenêtre 110, les fréquences utiles 112 doivent également être suffisamment éloignées les unes des autres pour éviter des phénomènes de croisement entre certaines d'entre elles, et permettre ainsi la mesure simultanée des variations fréquentielles des résonances d'intérêts dans cette bande de fréquence 110.

En effet, lorsque les variations fréquentielles de plusieurs fréquences de résonances mettant en oscillation une même plaque mécanique sont exploitées (c'est-à dire un élément sensible mis en oscillations forcées à de multiples modes de résonance), une difficulté de contrôle simultané de toutes ces variations peut alors survenir. A chaque fréquence de résonance est associé un système de contrôle (un circuit PLL par exemple) qui scrute les variations fréquentielles de cette fréquence de résonance, conformément notamment au dispositif de la figure 11. Ainsi, la prise en compte des variations fréquentielles de multiples résonances dans une fenêtre fréquentielle réduite et à grande densité modale (c'est-à-dire comportant un nombre important de fréquences de résonance) peut induire des phénomènes de croisement fréquentiels lorsque la plaque est sollicitée par l'action de forces extérieures à mesurer. Une telle fenêtre fréquentielle est illustrée par la fenêtre 110 de la figure 12.

Lors du croisement éventuel de certaines fréquences de résonances entre elles, leurs systèmes de contrôle respectifs (les systèmes 1021, 1012, 1013 si on réfère à l'exemple de la figure 11), dont un des rôles est de scruter les variations fréquentielles peuvent « décrocher », voire commuter entre eux, puis se mettre à poursuivre de manière non désirée la variation fréquentielle d'une fréquence de résonance qui n'est pas celle souhaitée originellement. Dès lors, la mesure simultanée de plusieurs fréquences de résonance devient irréalisable.

Par ailleurs, le corps d'épreuve 10 peut également être mis en résonance à ses propres fréquences de résonance lorsque celles-ci sont voisines des fréquences de résonance des plaques 21. Ce phénomène non désiré peut avoir pour conséquence d'induire des phénomènes de résonances supplémentaires non désirées sur les plaques lorsque la déformée modale associée à cette fréquence de mode global (tenant compte de la plaque et du corps d'épreuve) induit des déplacements sur la plaque. Il peut s'ensuivre alors une grande diversité de résonances sur les plaques, dont certaines sont non désirées pour l'exploitation des variations de fréquences. Comme dans le cas précédent, cela peut alors entraver le fonctionnement de la poursuite (« tracking ») des variations fréquentielles des résonances de chaque plaque.

Sans « nettoyage » fréquentiel préalable de ces phénomènes de résonances perturbatrices décrit ci-dessus, le capteur peut devenir défaillant, puisque des comportements non-linéaires et non prédictibles peuvent alors apparaître.

Un bon fonctionnement peut donc être atteint, lorsqu'on obtient :

- Une fenêtre de fréquences 110 dégagées («nettoyée») des fréquences de résonances parasites 111 ;
- Des fréquences de résonance utiles 112 suffisamment éloignées les unes des autres dans cette fenêtre 110.

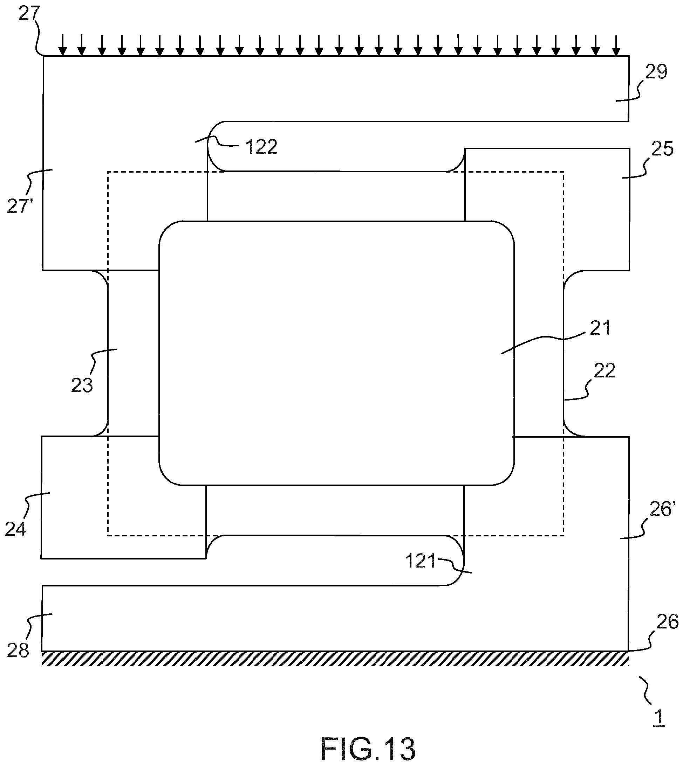

La figure 13 précise la structure d'un élément sensible 1 permettant d'obtenir une telle fenêtre de fréquences sans fréquences de résonances parasites. L'élément sensible est représenté de face, il est dans une configuration où la poutrelle 29 encastrée dans l'interface aval 2 est chargée, c'est-à-dire qu'elle subit un chargement.

En jouant sur les propriétés de masse et de raideur apportées par les parties massives 24, 25, 26, 27 du cadre 22 on parvient à modifier le contenu fréquentiel de la fenêtre 110 en particulier pour obtenir une fenêtre dégagée telle qu'illustrée par la figure 12(b).

En ajoutant de la masse 24, 25 dans les coins libres du cadre de base 23, c'est-à-dire non encastrés ou non chargés, on rejette les fréquences de résonance parasites vers les basses fréquences. Dans l'exemple de la figure 12, la fréquence parasite 112 est ainsi rejetée hors de la fenêtre d'intérêt 110 vers les basses fréquences. L'ajout de la masse peut être obtenu simplement en augmentant localement les dimensions du cadre de base dans ces coins libres, c'est-à-dire en augmentant localement son épaisseur et/ou sa largeur vers l'extérieur, comme illustré sur la figure 13 et sur la figure 3. Une autre solution peut consister à augmenter localement la densité de masse volumique du matériau du cadre de base dans les coins libres.

Pour rejeter les fréquences parasites vers les hautes fréquences, on ajoute de la raideur dans les deux autres coins, non libres, solidaires mécaniquement des interfaces 2, 3. L'ajout de cette raideur est effectué en augmentant la masse de ces coins directement reliés aux interfaces. Une telle augmentation de raideur est rendue possible par le mode de fixation de ces coins dans les interfaces. Chaque poutrelle 18, 29 étant encastrée dans une interface, elle forme une masse mécanique unique avec celle-ci. La fixation avec l'interface 2, 3, formant partie fixe, se fait alors par le coin 26, 27. En augmentant la masse de cette partie, notamment de la base 26', 27' et du coude 121, 122, reliant le cadre aux interfaces encastrant les poutrelles, comme illustré par les figures 12 et 3, on augmente ainsi la raideur à l'ensemble de l'élément sensible 1, ce qui a pour effet de rejeter les fréquences de résonance parasite vers les fréquences hautes. Dans l'exemple de la figure 12, la fréquence parasite 112' est ainsi rejetée hors de la fenêtre 110 vers les hautes fréquences.

Comme pour les deux autres coins précédents, l'ajout de masse se fait par exemple en augmentant localement les dimensions en épaisseur et en largeur vers l'extérieur du cadre. Elle peut également se faire en augmentant localement la densité de masse volumique.

Pour tous ces coins, on peut combiner l'augmentation locale des dimensions et l'augmentation locale de densité de masse volumique.

La figure 14 illustre le rejet de ces résonances parasites en fonction de l'apport des masses et raideurs aux coins d'un élément sensible, à titre d'exemple pour les modes d'excitation 70, 72, 73 illustrés par la figure 7. La figure 14(a) illustre un cas d'application avec le cadre 22 réduit au cadre de base et la figure 14(b) illustre l'amélioration apportée par les parties massives.

Le mode d'excitation 72 à la fréquence de résonance parasite 112 est rejeté vers les fréquences hautes en augmentant la raideur au niveau de la fixation du cadre sur les interfaces 2, 3. Le mode d'excitation 70 à la fréquence de résonance 112' est rejeté vers les fréquences basses en ajoutant de la masse aux coins libres.

Un autre problème qui peut apparaître est lié à l'apparition d'interférences fréquentielles inter-plaques. En effet, le capteur est fait de l'assemblage de plusieurs plaques 21 mises en oscillations forcées à leurs fréquences de résonance respectives. A l'échelle du capteur apparaissent donc plusieurs résonances provenant des différentes plaques sensibles, au nombre de trois dans l'exemple décrit ici. Il peut se produire un phénomène de propagation de certaines de ces résonances d'une plaque 21 vers une autre plaque 21 du capteur. Pour surmonter ce problème d'interférences inter-plaques, les plaques 21 ont des épaisseurs différentes. En d'autres termes, les plaques 21 prises deux à deux ont des épaisseurs différentes.

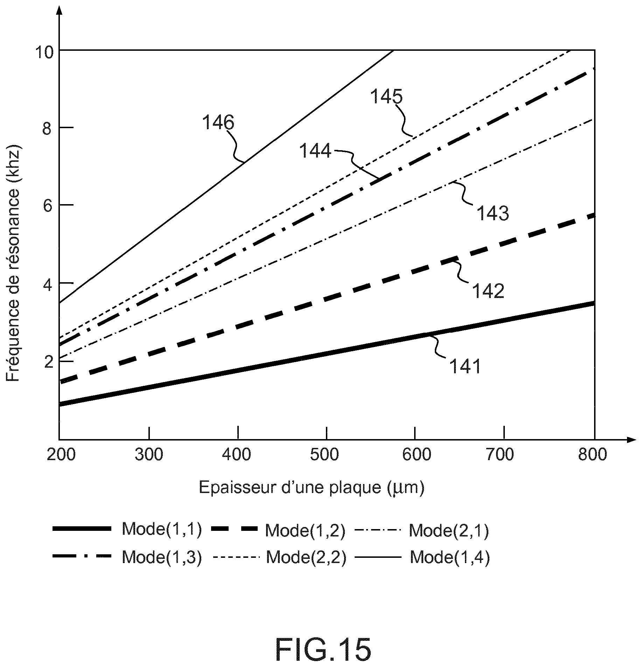

La figure 15 illustre, pour différents modes d'excitation, l'évolution de la fréquence de résonance d'une plaque en fonction de son épaisseur. Les courbes 141, 142, 143, 144, 145 et 146 correspondent respectivement aux modes (1, 1), (1, 2), (2, 1), (1, 3), (2, 2) et (1, 4).

Dans un exemple de réalisation à trois éléments sensibles 1, le tableau ci-dessous indique des exemples d'épaisseurs différenciées (en micromètres) des plaques sensibles 21 permettant d'éviter les interférences, les fréquences de résonance obtenues (en Hertz) étant indiquées pour chaque mode :

| Epaisseur des plaques ($\mu m$) | | Mode (1, 2) | Mode (2,1) | Mode (1,3) | Mode (2,2) |
|---|---|---|---|---|---|
| 460 | | 3128 Hz | 4733 Hz | 5847 Hz | 5910 Hz |
| 490 | | 3433Hz | 5051 Hz | 6200 Hz | 6291 Hz |
| 520 | | 3648 Hz | 5335 Hz | 6542Hz | 6680 Hz |

Cet exemple montre que les fréquences de résonance obtenue sont espacées de 200 à 250 Hz, ce qui est suffisant pour discriminer les fréquences d'une plaque à l'autre.

L'invention a été présentée avec un corps d'épreuve 10 comportant trois zones sensibles à base de plaques vibrantes, il est possible de prévoir un nombre supérieur de zones sensibles, c'est-à-dire de plaques. On augmente ainsi le coefficient de redondance.

Un capteur selon l'invention peut bien sûr être utilisé dans le domaine de la robotique, par exemple pour des bras robotiques manipulateurs en interaction avec un environnement et pilotés en effort grâce à un capteur d'effort multiaxes montés à son extrémité pour contrôler l'effort exercé à cette extrémité. Elle peut aussi s'appliquer pour des bras robotiques interactifs ou en interaction avec un opérateur, dans une phase de co-manipulation homme/robot, pour estimer les efforts fournis par l'opérateur pour détecter ses intentions de mouvement.

Avantageusement, l'invention dépasse largement ce cadre et peut être utilisée dans d'autres domaines, notamment industriels, pour lesquels la mesure de force est nécessaire. Les dimensions du capteur peuvent être aisément adaptées aux gammes d'efforts en jeu.

**Revendications**

1. Capteur d'efforts résonant, **caractérisé en ce qu'**il comporte un corps d'épreuve (10) apte à subir un torseur d'efforts produits par une structure mécanique externe, ledit corps (10) comportant au moins :

- une première interface (2) et une deuxième interface (3) aptes chacune à entrer en contact avec ladite structure ;
- au moins deux éléments sensibles (1) disposés chacun entre ces deux interfaces (2, 3) ;

chacun des au moins deux éléments sensibles (1) comportant une plaque (21) encastrée dans un cadre (22) solidaire mécaniquement desdites interfaces (2, 3), ledit cadre (22) étant fixé auxdites interfaces par deux coins opposés (26, 27), les deux autres coins étant libres (24, 25), une augmentation locale de masse étant réalisée en chaque coin (24, 25, 26, 27) dudit cadre par rapport au cadre de base (23);

ladite plaque (21) étant équipée de transducteurs d'excitation (41, 42, 43, 44) sur une face et de capteurs (41', 42', 43', 44') sur l'autre face,

chaque plaque (21) étant apte à entrer en résonance sous l'effet d'excitations mécaniques locales produites en des points particuliers ($N^U$, $S^U$, $W^U$, $E^U$) par des transducteurs d'excitation (41, 42, 43, 44) étant aptes à porter ladite plaque à plusieurs fréquences de résonances, des capteurs (41', 42', 43', 44') étant aptes à capter les signaux résonant produits au niveau desdits points particuliers, des moyens de mesure (81, 82) étant apte à mesurer les décalages de fréquences de résonance de signaux qui sont des combinaisons linéaires des signaux résonant captés, lesdits décalages étant fonction de contraintes mécaniques induites par lesdits efforts et transmises à ladite plaque (21) par ledit cadre (22), les composantes dudit torseur d'efforts étant déterminées à partir des décalages de fréquences de résonance mesurés sur les plaques (21) desdits éléments sensibles (1).

2. Capteur selon la revendication 1, **caractérisé en ce que** lesdites excitations sont produites simultanément.

3. Capteur selon l'une quelconque des revendications précédentes, **caractérisé en ce que** lesdits points particuliers ($N^U$, $S^U$, $W^U$, $E^U$) sont situés en des lignes nodales (61, 62, 63, 64, 65, 66) de mode vibratoires de façon à permettre la sélection de fréquences de résonances de modes particuliers par lesdites combinaisons.

4. Capteur selon l'une quelconque des revendications précédentes, **caractérisé en ce que** la combinaison desdites fréquences est une opération d'addition ou de soustraction.

5. Capteur d'effort selon l'une quelconque des revendications précédentes, **caractérisé en ce que** chaque plaque (21) ayant une dimension selon un axe x et une dimension selon un axe y, elle comporte quatre points particuliers d'excitation ($N^U$, $S^U$, $W^U$, $E^U$), un point Nord ($N^U$) et un point Sud ($S^U$) étant situés sur l'axe de symétrie (62) de ladite plaque selon y, et un point Ouest ($W^U$) et un point Est ($E^U$) étant situés sur l'axe de symétrie (65) selon x, lesdits points Nord et Sud et Ouest et Est étant situés symétriquement par rapport à l'intersection des deux axes de symétrie (62, 65).

6. Capteur selon la revendication 5, **caractérisé en ce que** trois fréquences de résonances de trois modes vibratoires sont sélectionnées, une fréquence d'un premier mode étant sélectionnée en additionnant les fréquences de résonance du point Nord ($N^U$) et du point Sud ($N^U + S^U$) et/ou du point Ouest ($W^U$) et du point Est ($W^U + E^U$), une fréquence d'un deuxième mode étant sélectionnée en effectuant une soustraction entre la mesure du point Nord et la mesure du point Sud ($N^U - S^U$), et une troisième fréquence d'un troisième mode étant sélectionnée en effectuant une soustraction entre la mesure du point Ouest et la mesure du point Est ($W^U - E^U$).

7. Capteur selon l'une quelconque des revendications 1 à 4, **caractérisé en ce que** chaque plaque (21) comporte six points particuliers d'excitation (A1, A2, A3, A4, A5, A6), deux points (A1, A4) étant placés sur un premier axe de symétrie (62) et disposés symétriquement par rapport au deuxième axe de symétrie (65), les quatre autres points (A2, A3, A5, A6) étant disposés de part et d'autre de ces axes de symétrie (62, 65) de telle façon que l'ensemble des six points forme un hexagone.

8. Capteur selon l'une quelconque des revendications précédentes, **caractérisé en ce que** les mesures de décalages sont effectuées par des circuits à verrouillage de phase (81) dont le signal de sortie commande un transducteur.

9. Capteur selon l'une quelconque des revendications précédentes, **caractérisé en ce que** lesdits transducteurs (41, 42, 43, 44) sont de type piézo-électrique.

10. Capteur selon l'une quelconque des revendications précédentes, **caractérisé en ce que** les capteurs (41', 42', 43', 44') sont de type piézo-électrique, fixés chacun en regard d'un transducteur de l'autre côté de la face de ladite plaque (21), les signaux produits étant les signaux de charges desdits capteurs de type piézo-électrique.

11. Capteur selon l'une quelconque des revendications précédentes, **caractérisé en ce que** chacun desdits coins (26, 27) fixant ledit cadre (22) à une interfaces (2, 3) est prolongés via un coude (121, 122) par une poutrelle (28, 29) parallèle audit cadre, ladite poutrelle (28, 29) étant encastrée dans l'interface (2, 3), la fixation dudit élément sensible (1) étant réalisé par l'encastrement de la poutrelle.

**12.** Capteur selon l'une quelconque des revendications précédentes, **caractérisé en ce que** l'augmentation locale de masse au niveau desdits coins (24, 25, 26, 27) est réalisée par l'augmentation locale en ces points de l'épaisseur dudit cadre et/ou de la largeur dudit cadre vers l'extérieur.

**13.** Capteur selon l'une quelconque des revendications précédentes, **caractérisé en ce que** l'augmentation locale de masse au niveau desdits coins (24, 25, 26, 27) est réalisée par l'augmentation locale de densité de masse volumique.

**14.** Capteur selon l'une quelconque des revendications précédentes, **caractérisé en ce que en ce que** les épaisseurs des plaques (21) desdits éléments sensibles prises deux à deux sont différentes.

**15.** Capteur selon l'une quelconque des revendications précédentes, **caractérisé en ce que** la géométrie dudit corps d'épreuve (10) est invariante selon l'angle séparant les points centraux de deux éléments sensibles.

**16.** Capteur selon l'une quelconque des revendications précédentes, **caractérisé en ce que** ladite plaque sensible (21) d'un élément sensible (1) est placée en dehors de la fibre neutre (50) de l'ensemble formé du cadre (22) et de ladite plaque (21).

## Patentansprüche

**1.** Resonanter Kraftsensor, **dadurch gekennzeichnet, dass** er einen Testkörper (10) umfasst, der einer Schraube von Kräften ausgesetzt werden kann, die von einer äußeren mechanischen Struktur erzeugt werden, wobei der Körper (10) mindestens Folgendes umfasst:

- eine erste Schnittstelle (2) und eine zweite Schnittstelle (3), die jeweils mit der Struktur in Kontakt kommen können;
- mindestens zwei empfindliche Elemente (1), die jeweils zwischen diesen beiden Schnittstellen (2, 3) angeordnet sind;

wobei jedes der mindestens zwei empfindlichen Elemente (1) eine Platte (21) aufweist, die in einen Rahmen (22) eingebettet ist, der mechanisch fest mit den Schnittstellen (2, 3) verbunden ist, wobei der Rahmen (22) an den Schnittstellen durch zwei gegenüberliegende Ecken (26, 27) befestigt ist, wobei die beiden anderen Ecken frei (24, 25) sind, wobei eine lokale Massenzunahme an jeder Ecke (24, 25, 26, 27) des Rahmens in Bezug auf den Grundrahmen (23) erzielt wird;
wobei die Platte (21) mit Anregungswandlern (41, 42, 43, 44) auf einer Seite und Sensoren (41', 42', 43', 44') auf der anderen Seite ausgestattet ist,
wobei jede Platte (21) unter der Wirkung lokaler mechanischer Anregungen, die an bestimmten Punkten ($N^U$, $S^U$, $W^U$, $E^U$) durch Anregungswandler (41, 42, 43, 44) erzeugt werden, die die Platte auf mehrere Resonanzfrequenzen bringen können, in Resonanz treten kann, wobei Sensoren (41', 42', 43', 44') die an den bestimmten Punkten erzeugten Resonanzsignale erfassen können, wobei Messmittel (81, 82) die Resonanzfrequenzverschiebungen von Signalen messen können, die lineare Kombinationen der erfassten Resonanzsignale sind, wobei die Verschiebungen eine Funktion von mechanischen Spannungen sind, die durch die Kräfte induziert und durch den Rahmen (22) auf die Platte (21) übertragen werden, wobei die Komponenten der Kraftschraube aus den Resonanzfrequenzverschiebungen bestimmt werden, die an den Platten (21) der empfindlichen Elemente (1) gemessen werden.

**2.** Sensor nach Anspruch 1, **dadurch gekennzeichnet, dass** die Anregungen gleichzeitig erzeugt werden.

**3.** Sensor nach einem der vorherigen Ansprüche, **dadurch gekennzeichnet, dass** die bestimmten Punkte ($N^U$, $S^U$, $W^U$, $E^U$) auf Knotenlinien (61, 62, 63, 64, 65, 66) von Vibrationsmoden liegen, um die Auswahl von Resonanzfrequenzen bestimmter Moden durch die Kombinationen zu ermöglichen.

**4.** Sensor nach einem der vorherigen Ansprüche, **dadurch gekennzeichnet, dass** die Kombination der Frequenzen eine Additions- oder Subtraktionsoperation ist.

**5.** Kraftsensor nach einem der vorherigen Ansprüche, **dadurch gekennzeichnet, dass** jede Platte (21), die eine Dimension entlang einer x-Achse und eine Dimension entlang einer y-Achse hat, vier bestimmte Anregungspunkte ($N^U$, $S^U$, $W^U$, $E^U$) hat, wobei ein Nordpunkt ($N^U$) und ein Südpunkt ($S^U$) auf der Symmetrieachse (62) der Platte entlang y liegen und ein Westpunkt ($W^U$) und ein Ostpunkt ($E^U$) auf der Symmetrieachse (65) entlang x liegen, wobei die Nord- und Süd- und West- und Ostpunkte symmetrisch in Bezug auf den Schnittpunkt der beiden Symmetrieachsen (62, 65) sind.

**6.** Sensor nach Anspruch 5, **dadurch gekennzeichnet, dass** drei Resonanzfrequenzen von drei Vibrationsmoden ausgewählt werden, wobei eine Frequenz einer ersten Mode durch Addieren der Resonanzfrequenzen des Nordpunktes ($N^U$) und des Südpunktes ($N^U + S^U$) und/oder des Westpunktes ($W^U$) und des Ostpunktes ($W^U + E^U$) ausgewählt wird, wobei eine Frequenz einer zweiten Mode durch Subtraktion zwischen der Messung des Nordpunktes und der Messung des Südpunktes ($N^U - S^U$) ausgewählt wird und eine dritte Frequenz einer dritten Mode durch Subtraktion zwischen der Messung des Westpunktes und der Messung des Ostpunktes ($W^U - E^U$) ausgewählt wird.

**7.** Sensor nach einem der Ansprüche 1 bis 4, **dadurch gekennzeichnet, dass** jede Platte (21) sechs bestimmte Anregungspunkte (A1, A2, A3, A4, A5, A6) aufweist, wobei zwei Punkte (A1, A4) auf einer ersten Symmetrieachse (62) liegen und symmetrisch in Bezug auf die zweite Symmetrieachse (65) angeordnet sind, wobei die anderen vier Punkte (A2, A3, A5, A6) auf beiden Seiten dieser Symmetrieachsen (62, 65) auf eine solche Weise angeordnet sind, dass alle sechs Punkte ein Sechseck bilden.

**8.** Sensor nach einem der vorherigen Ansprüche, **dadurch gekennzeichnet, dass** die Versatzmessungen durch Phasenregelkreise (81) durchgeführt werden, deren Ausgangssignal einen Wandler ansteuert.

**9.** Sensor nach einem der vorherigen Ansprüche, **dadurch gekennzeichnet, dass** die Wandler (41, 42, 43, 44) vom piezoelektrischen Typ sind.

**10.** Sensor nach einem der vorherigen Ansprüche, **dadurch gekennzeichnet, dass** die Sensoren (41', 42', 43', 44') vom piezoelektrischen Typ sind, von denen jeder gegenüber einem Wandler auf der anderen Seite der Fläche der Platte (21) befestigt ist, wobei die erzeugten Signale die Ladungssignale der Sensoren vom piezoelektrischen Typ sind.

**11.** Sensor nach einem der vorherigen Ansprüche, **dadurch gekennzeichnet, dass** jede der Ecken (26, 27), die den Rahmen (22) an einer Schnittstelle (2, 3) befestigen, über eine Biegung (121, 122) durch einen Träger (28, 29) parallel zum Rahmen verlängert ist, wobei der Träger (28, 29) in die Schnittstelle (2, 3) eingebettet ist, wobei die Befestigung des empfindlichen Elements (1) durch Einbettung des Trägers erfolgt.

**12.** Sensor nach einem der vorherigen Ansprüche, **dadurch gekennzeichnet, dass** die lokale Massenzunahme an den Ecken (24, 25, 26, 27) dadurch erreicht wird, dass an diesen Punkten die Dicke des Rahmens und/oder die Breite des Rahmens nach außen hin lokal vergrößert ist/sind.

**13.** Sensor nach einem der vorherigen Ansprüche, **dadurch gekennzeichnet, dass** die lokale Massezunahme an den Ecken (24, 25, 26, 27) durch eine lokale Zunahme der Volumenmassendichte erreicht wird.

**14.** Sensor nach einem der vorherigen Ansprüche, **dadurch gekennzeichnet, dass** die Dicken der Platten (21) der empfindlichen Elemente paarweise unterschiedlich sind.

**15.** Sensor nach einem der vorherigen Ansprüche, **dadurch gekennzeichnet, dass** die Geometrie des Testkörpers (10) gemäß dem Winkel, der die Mittelpunkte zweier empfindlicher Elemente trennt, invariant ist.

**16.** Sensor nach einem der vorherigen Ansprüche, **dadurch gekennzeichnet, dass** die empfindliche Platte (21) eines empfindlichen Elements (1) außerhalb der neutralen Faser (50) der von dem Rahmen (22) und der Platte (21) gebildeten Baugruppe angeordnet ist.

**Claims**

**1.** A resonant force sensor, **characterized in that** it comprises a test body (10) able to be subjected to a force torsor produced by an external mechanical structure, said body (10) comprising at least:

- a first interface (2) and a second interface (3) each able to come into contact with said structure;
- at least two sensitive elements (1) each disposed between said two interfaces (2, 3);

each of said at least two sensitive elements (1) having a plate (21) embedded in a frame (22) mechanically secured to said interfaces (2, 3), wherein the frame (22) is attached to said interfaces (2, 3) by two opposite corners (26, 27), both other corners being free (24, 25), wherein a local mass increase is performed in each corner (24, 25, 26, 27) of said frame relative to the base frame (23);
said plate (21) being equipped with excitation transducers (41, 42, 43, 44) on a face and with sensors (41', 42', 43', 44') on the other face,
each plate (21) being able to resonate under the effect of local mechanical excitations produced at particular points ($N^U$, $S^U$, $W^U$, $E^U$) by excitation transducers (41, 42, 43, 44) which are able to bring said plate to a plurality of resonant frequencies, sensors (41', 42', 43', 44') which are able to detect the resonant signals produced at said particular points, measurement means (81, 82) which are able to measure the resonant frequency shifts of signals that are linear combinations of the detected resonant signals, said shifts being a function of mechanical constraints induced by said forces and transferred to said plate (21) by said frame (22), the components of said force torsor being determined on the basis of the resonant frequency shifts measured on the plates (21) of said sensitive elements (1).

2. The sensor according to claim 1, **characterised in that** said excitations are produced simultaneously.

3. The sensor according to any one of the preceding claims, **characterised in that** said particular points ($N^U$, $S^U$, $W^U$, $E^U$) are located at vibration mode nodal lines (61, 62, 63, 64, 65, 66) in order to allow resonant frequencies of particular modes to be selected by said combinations.

4. The sensor according to any one of the preceding claims, **characterised in that** the combination of said frequencies is an addition or subtraction operation.

5. The force sensor according to any one of the preceding claims, **characterised in that**, with each plate (21) having a dimension along an axis x and a dimension along an axis y, it comprises four particular excitation points ($N^U$, $S^U$, $W^U$, $E^U$), with a northern point ($N^U$) and a southern point ($S^U$) being located on the axis of symmetry (62) of said plate along y, and a western point ($W^U$) and an eastern point ($E^U$) being located on the axis of symmetry (65) along x, said northern and southern and western and eastern points being symmetrically located relative to the intersection of the two axes of symmetry (62, 65).

6. The sensor according to claim 5, **characterised in that** three resonant frequencies of three vibration modes are selected, a frequency of a first mode being selected by adding the resonant frequencies of the northern point ($N^U$) and of the southern point ($N^U + S^U$) and/or of the western point ($W^U$) and of the eastern point ($W^U + E^U$), a frequency of a second mode being selected by performing a subtraction between the measurement of the northern point and the measurement of the southern point ($N^U - S^U$), and a third frequency of a third mode being selected by performing a subtraction between the measurement of the western point and the measurement of the eastern point ($W^U - E^U$).

7. The sensor according to any one of claims 1 to 4, **characterised in that** each plate (21) has six particular excitation points (A1, A2, A3, A4, A5, A6), wherein two points (A1, A4) are placed on a first axis of symmetry (62) and arranged symmetrically relative to the second axis of symmetry (65), the four others points (A2, A3, A5, A6) being arranged on either sides of said axis of symmetry (62, 65) such that together, all six points form an hexagon.

8. The sensor according to any one of the preceding claims, **characterised in that** the shifts measurements are performed by phase locking circuits (81), whose output signal controls a transducer.

9. The sensor according to any one of the preceding claims, **characterised in that** said transducers (41, 42, 43, 44) are of the piezoelectric type.

10. The sensor according to any one of the preceding claims, **characterised in that** the sensors (41', 42', 43', 44') are of the piezoelectric type, each fixed facing a transducer on the other side of the face of said plate (21), the produced signals being the signals of loads of said piezoelectric type sensors.

11. The sensor according to any one of the preceding claims, **characterised in that** each said corners (26, 27) attaching said frame (22) to an interface (2, 3) is prolonged with a bend (121, 122) by a beam (28, 29) parallel to said frame, said beam (28, 29) being embedded in the interface (2, 3), wherein said sensitive element (1) is attached by embedding the beam.

12. The sensor according to any one of the preceding claims, **characterised in that** the local mass increase at each corner (24, 25, 26, 27) is performed by locally increasing the thickness of said frame and/or the width of said frame outwards at these points.

13. The sensor according to any one of the preceding claims, **characterised in that** the local mass increase at each corner (24, 25, 26, 27) is performed by locally increasing the density of mass density.

14. The sensor according to any one of the preceding claims, **characterised in that** the thicknesses of the plates (21) of said sensitive elements are different when compared two by two.

15. The sensor according to any one of the preceding claims, **characterised in that** the geometry of said test body (10) is invariant according to the angle separating the central points of two sensitive elements.

16. The sensor according to any one of the preceding claims, **characterised in that** the sensitive plate (21) of a sensitive element (1) is placed outside the neutral fibre (50) of the assembly formed by the frame (22) and said plate (21).

FIG.1a

FIG.1b

FIG.1c

FIG.1d

FIG.2

FIG.4

FIG.3

FIG.5

FIG.6

Modes (i,j)

i = 1    i = 2    i = 3

j = 1
j = 2
j = 3

✓ Mode commandable/observable

✗ Mode filtre

FIG.7

EP 3 465 120 B1

FIG.8

FIG.9

FIG.10a

FIG.10b

modes (n,m) — 21

| | (1,2) | (1,3) | (2,1) | (2,2) | Modes sélectionnés |
|---|---|---|---|---|---|
| $S_a = S1 + S4$ | 0 | $+2\overline{Q}_{(1,3)}$ | 0 | 0 | (1,3) |
| $S_b = S2 + S3$ | 0 | 0 | $-2\overline{Q}_{(2,1)}$ | 0 | (2,1) |
| $S_c = S2 + S5$ | 0 | 0 | 0 | $-2\overline{Q}_{(2,2)}$ | (2,2) |
| $S_d = S2 + S6$ | $+2\overline{Q}_{(1,2)}$ | 0 | 0 | 0 | (1,2) |
| $S_e = S3 + S5$ | $-2\overline{Q}_{(1,2)}$ | 0 | 0 | 0 | (1,2) |
| $S_f = S3 + S6$ | 0 | 0 | 0 | $+2\overline{Q}_{(2,2)}$ | (2,2) |
| $S_g = S5 + S6$ | 0 | 0 | $+2\overline{Q}_{(2,1)}$ | 0 | (2,1) |

| | (1,2) | (1,3) | (2,1) | (2,2) | |
|---|---|---|---|---|---|
| $S_d - S_e$ | $+4\overline{Q}(1,2)$ | 0 | 0 | 0 | (1,2) |
| $S_a$ | 0 | $+2\overline{Q}(1,3)$ | 0 | 0 | (1,3) |
| $S_g - S_b$ | 0 | 0 | $+4\overline{Q}(2,1)$ | 0 | (2,1) |
| $S_f - S_c$ | 0 | 0 | 0 | $+4\overline{Q}(2,2)$ | (2,2) |

# FIG.10c

FIG.11

EP 3 465 120 B1

112'  111       112

(a)

f

(b)

112'   111    110      112

FIG.12

70          73              72

112'          112

111

(a)

(b)

111

70

112'        110        112

72

73

FIG.14

FIG.13

FIG.15

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **DAVINSON CAST et al.** Development and Characterization of a Dynamic Smart Structure Providing Multi-axis Force Sensing for Robotic Applications. *IEEE International Conférence on Robotics and Automation,* 2015
- **CASTANO-CANO DAVINSON et al.** Next force sensing technology for robots : multi-axis resonant sensors. *SPIE - International society for optical engineering, proceedings,* 13 Mai 2016, vol. 9859
- **A. CHESHMEHDOOST ; B.E. JONES.** Design and performance characteristics of an integrated high capacity DETF-based force sensor. *Sensors and Actuators A: Physical,* Mars 1996, vol. 52 (13), 99-102
- **T. FABULA ; H.J. WAGNER ; B. SCHMIDT ; S. BUTTGENBACH.** Triple-beam resonant silicon force sensor based on piezoelectric thin _lms. *Sensors and Actuators A: Physical,* Avril 1994, vol. 42 (13), 375-380
- **C. BARTHOD ; Y. TEISSEYRE ; C. GHIN ; G. GAUTIER.** Resonant force sensor using a PLL electronic. *Sensors and Actuators A: Physical,* Avril 2003, vol. 104 (2), 143-150
- **D. CASTANO-CANO ; M. GROSSARD ; A. HUBERT.** Multi-axis Force Sensing with Pre-stressed Resonant Composite Plates : An Alternative to Strain Gauge Force Sensors. *2014 IEEE/ASME International Conférence on Advanced Intelligent Mechatronics (AIM),* 08 Juillet 2014